# EUROPEAN PATENT APPLICATION

(11) **EP 4 257 594 A1**
(43) Date of publication of application: **11.10.2023**
(21) Application number: 21900338.1
(22) Date of filing: 29.10.2021
(51) Int. Cl.: C07G 1/00, C08H 8/00

(54) **METHOD FOR ISOLATING, FROM PLANT BIOMASS, AT LEAST ONE SELECTED FROM GROUP CONSISTING OF LIGNIN, HEMICELLULOSE, LIGNIN-POLYSACCHARIDE COMPOSITE, CELLULOSE, AND HEMICELLULOSE-CELLULOSE COMPOSITE**

(30) Priority: 04.12.2020 JP 2020201833
(71) Applicant: Kyoto University, Kyoto-shi, Kyoto 606-8501 (JP)
(72) Inventor: NISHIMURA, Hiroshi, Kyoto-shi, Kyoto 606-8501 (JP); WATANABE, Takashi, Kyoto-shi, Kyoto 606-8501 (JP); YAMADA, Misato, Kyoto-shi, Kyoto 606-8501 (JP)
(74) Representative: Vossius & Partner Patentanwälte Rechtsanwälte mbB
(86) International application number: PCT/JP2021/040159
(87) International publication number: WO 2022/118583

(57) **Abstract**

An object of the present invention is to provide a method for isolating from plant biomass at least one member selected from the group consisting of lignin, hemicelluloses, lignin-polysaccharide complexes, cellulose, and hemicellulose-cellulose complexes. The object is achieved by a method for isolating from plant biomass at least one member selected from the group consisting of lignin, hemicelluloses, lignin-polysaccharide complexes, cellulose, and hemicellulose-cellulose complexes, the method comprising step (A) of bringing a solution containing an organic acid and a peracid into contact with plant biomass.

## Description

The present invention relates to a method for isolating from plant biomass at least one member selected from the group consisting of lignin, hemicelluloses, lignin-polysaccharide complexes, cellulose, and hemicellulose-cellulose complexes.

### Background Art

Lignin, together with polysaccharides (cellulose and hemicelluloses), is a major component constituting the cell walls of plants. Lignin has attracted attention as a naturally occurring, abundant aromatic polymer. At present, lignin is mainly obtained as a by-product in the manufacturing process of paper pulp or the manufacturing process of bioethanol. Due to their denatured form, it is difficult to increase the functionality of these isolated lignins.

Thus, studies suggest various methods for isolating lignin while avoiding denaturation as much as possible (PTL 1).

### Citation List

### Patent Literature

PTL 1: JP2013-241391A

### Summary of Invention

### Technical Problem

An object of the present invention is to provide a method for isolating from plant biomass at least one member selected from the group consisting of lignin, hemicelluloses, lignin-polysaccharide complexes, cellulose, and hemicellulose-cellulose complexes.

### Solution to Problem

The present inventors conducted extensive research to achieve the above object. As a result, the inventors came up with the idea of extracting lignin in the reverse order of wood biosynthesis, as a novel method for isolating lignin, and found that this method could achieve the above object. After further research based on these findings, the present invention has been accomplished. The present invention encompasses the following embodiments.

### Item 1.

A method for isolating from plant biomass at least one member selected from the group consisting of lignin, hemicelluloses, lignin-polysaccharide complexes, cellulose, and hemicellulose-cellulose complexes, the method comprising
step (A) of bringing a solution containing an organic acid and a peracid into contact with plant biomass.

### Item 2.

The method according to Item 1, wherein the step (A) comprises
step (A1) of bringing a solution at a temperature of 90°C or lower containing an organic acid and a peracid into contact with plant biomass, and/or
step (A2) of bringing a solution at a temperature higher than 90°C and 160°C or lower containing an organic acid and a peracid into contact with plant biomass.

### Item 3.

The method according to Item 1 or 2, comprising obtaining from a soluble part obtained in the step (A) at least one member selected from the group consisting of lignin, hemicelluloses, lignin-polysaccharide complexes, and hemicellulose-cellulose complexes.

### Item 4.

The method according to any one of Items 1 to 3, comprising obtaining from the insoluble part obtained in the step (A) at least one member selected from the group consisting of cellulose, hemicelluloses, and hemicellulose-cellulose complexes.

### Item 5.

The method according to any one of Items 1 to 4, comprising irradiating the plant biomass with microwaves or ultrasonic waves in the step (A).

### Item 6.

The method according to any one of Items 1 to 5, wherein the plant biomass used in the step (A) is an alkali-treated material of a plant body or an alkali-treated material of a mechanically processed product of a plant body.

### Item 7.

Lignin having a content of β-O-4 ether type structure of 50% or more and a solubility in 60 to 80% ethanol at 25°C of 2 w/v% or more.

### Item 8.

Lignin obtainable by the method of any one of Items 1 to 6.

### Item 9.

A lignin-polysaccharide complex containing at least one bond selected from the group consisting of an α-ether bond between lignin and polysaccharide, an α-ester bond between lignin and polysaccharide, and a γ-ester bond between lignin and polysaccharide.

### Item 10.

The lignin-polysaccharide complex according to Item 9, which has a solubility in 60 to 80% ethanol at 25°C of 2 w/v% or more.

### Item 11.

A lignin-polysaccharide complex obtainable by the method of any one of Items 1 to 6.

### Item 12.

Cellulose obtainable by the method of any one of Items 1 to 6.

### Item 13.

A hemicellulose-cellulose complex obtainable by the method of any one of Items 1 to 6.

### Item 14.

A hemicellulose obtainable by the method of any one of Items 1 to 6.

### Item 15.

A self-assembled body, the self-assembled body being at least one member selected from the group consisting of the lignin of Item 7 or 8 and the lignin-polysaccharide complex of any one of Items 9 to 11.

### Item 16.

The self-assembled body according to Item 15, which is in a sheet or particulate form.

### Item 17.

A phosphor comprising the self-assembled body of Item 15 or 16.

### Item 18.

The phosphor according to Item 17, which exhibits anti-Stokes fluorescence.

### Item 19.

An ultraviolet absorber containing at least one member selected from the group consisting of the lignin of Item 7 or 8 and the lignin-polysaccharide complex of any one of Items 9 to 11.

### Advantageous Effects of Invention

The present invention can provide a method for isolating from plant biomass at least one member selected from the group consisting of lignin, hemicelluloses, lignin-polysaccharide complexes, cellulose, and hemicellulose-cellulose complexes.

### Brief Description of Drawings

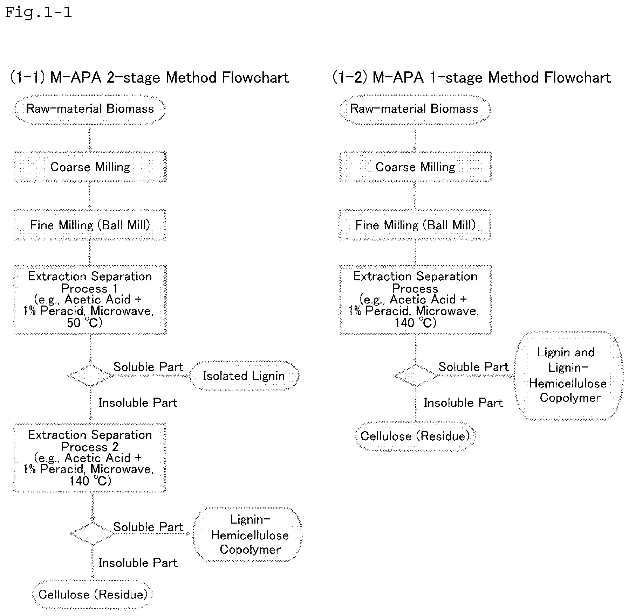

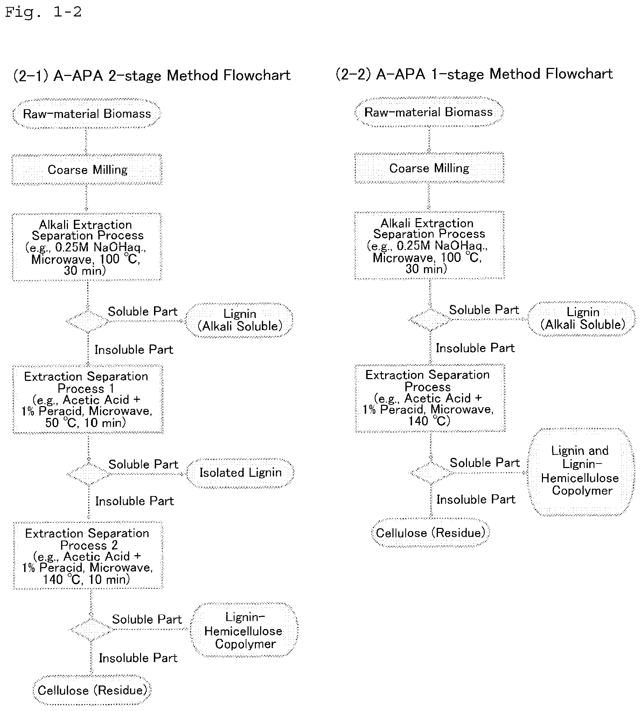

Fig. 1-1 shows flow charts of a method of the present invention (M-APA method).
Fig. 1-2 shows flow charts of a method of the present invention (A-APA method).

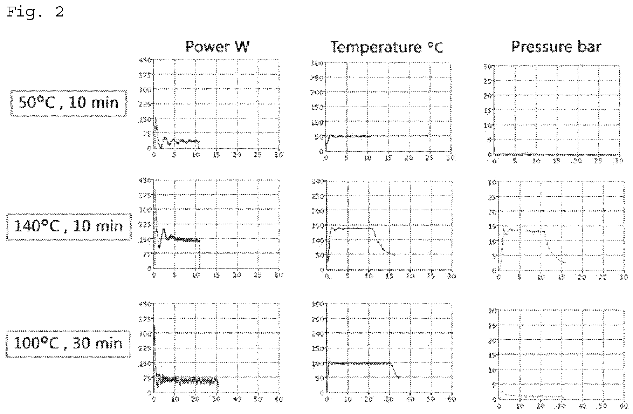

Fig. 2 shows microwave irradiation conditions for isolating lignocellulose components, power, temperature, pressure profile; and device specifications: Initiator+ 60 microwave synthesizer manufactured by Biotage, stirring speed: 600 rpm, Cooling: On, Absorption: High.

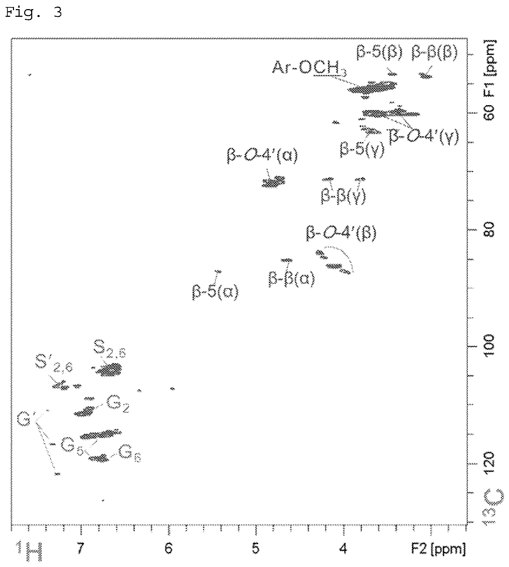

Fig. 3 is a two-dimensional NMR spectrum of a low-modified, high-purity lignin with a high ether-type content obtained according to the present invention. This is a result of analysis of lignin isolated according to the M-APA method (microwave treatment at 50°C for 10 minutes with acetic acid peracetic acid 1%) using *eucalyptus* as a starting material.

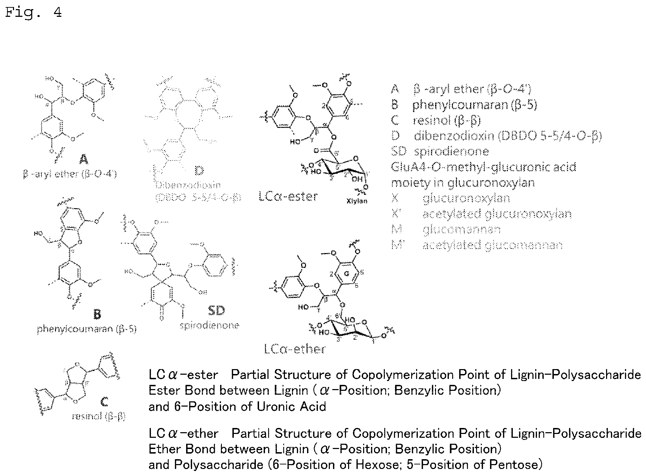

Fig. 4 shows the partial chemical structures of lignin interunit bonds and covalent bonds between lignin and hemicelluloses.

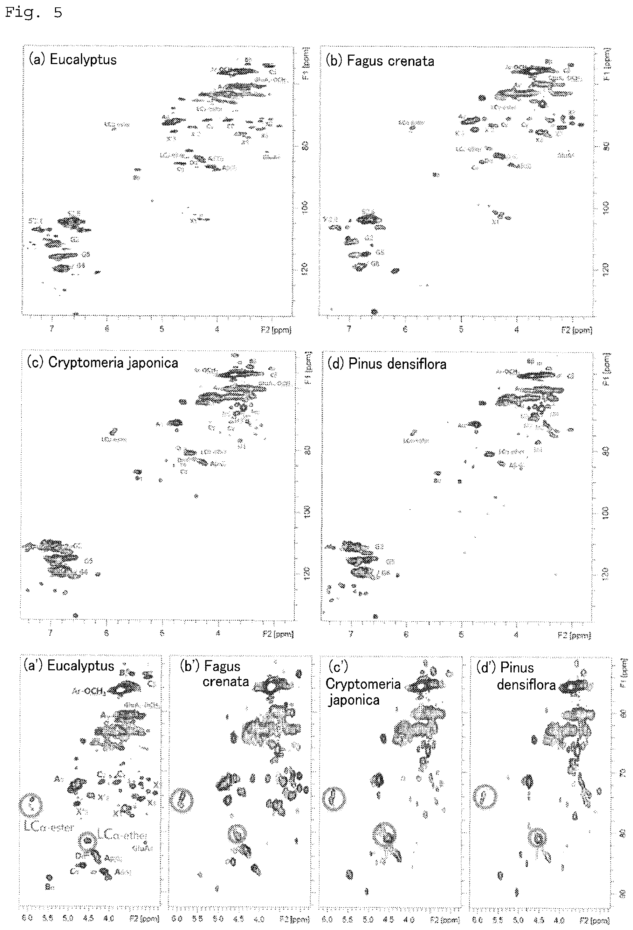

Fig. 5 shows two-dimensional NMR spectra a to d of lignin-hemicellulose copolymers, and enlarged views a' to d' of interunit bonds and saccharide regions. Lignin-hemicellulose copolymers obtained from hardwood (a, b) and softwood (c, d) according to the M-APA method were analyzed. The circles in the figure indicate LC bonds (ether type and ester type).

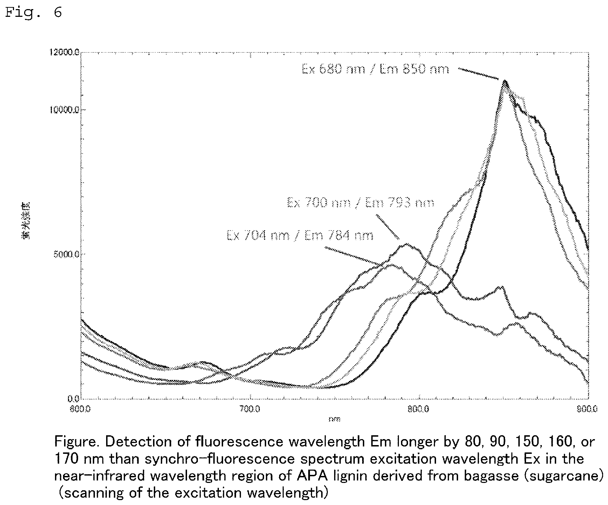

Fig. 6 is a synchro-fluorescence spectrum of APA lignin derived from bagasse (sugarcane) in the near-infrared wavelength region. This shows a result of synchro-scanning measurement for detecting a predetermined Stokes shift, that is, a result of the detection of fluorescence wavelength Em that is 80, 90, 150, 160, or 170 nm longer than excitation wavelength Ex (scanning of the excitation wavelength).

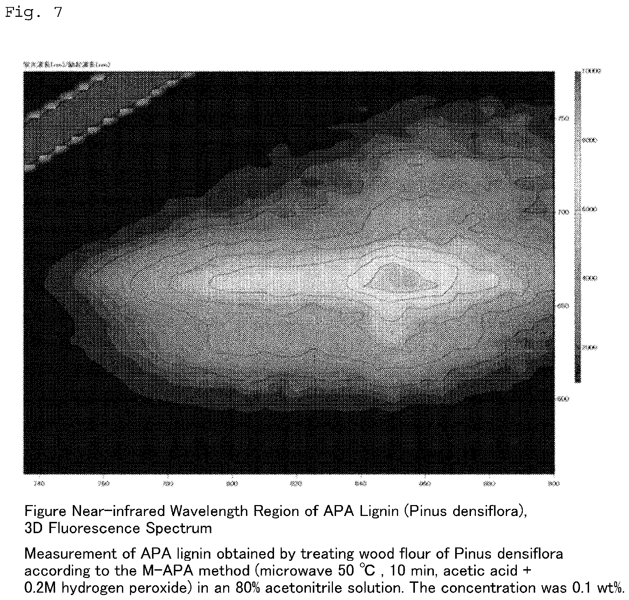

Fig. 7 shows a three-dimensional fluorescence spectrum of *Pinus densiflora* APA lignin in the near-infrared wavelength region. APA lignin obtained by treating wood flour of *Pinus densiflora* according to the M-APA method (microwaves at 50°C for 10 min with acetic acid + 0.2M hydrogen peroxide) was measured in an 80% acetonitrile solution (concentration: 0.1 wt%).

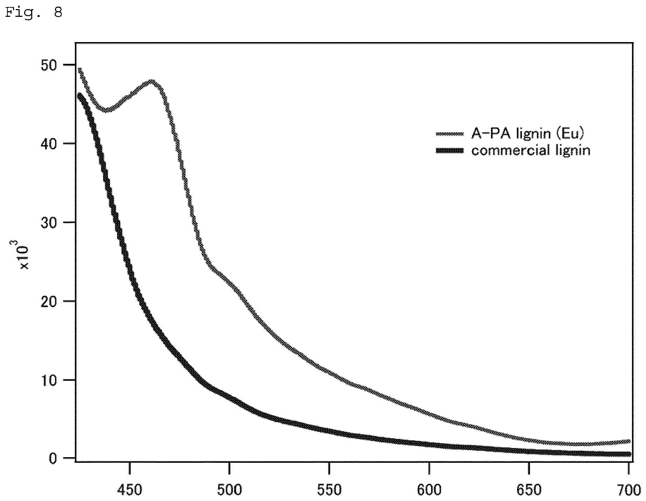

Fig. 8 is a graph showing a comparison between comparative synchro-scanning fluorescence spectra of commercial lignin (TCI alkaline lignin, Tokyo Chemical Industry Co., Ltd., blue line) and lignin (APA lignin, red line). A fluorescence longer than the excitation wavelength (plus 90 nm) was detected (the excitation wavelength scanned). Lignin (APA lignin) exhibited characteristic fluorescence in the long-wavelength region.

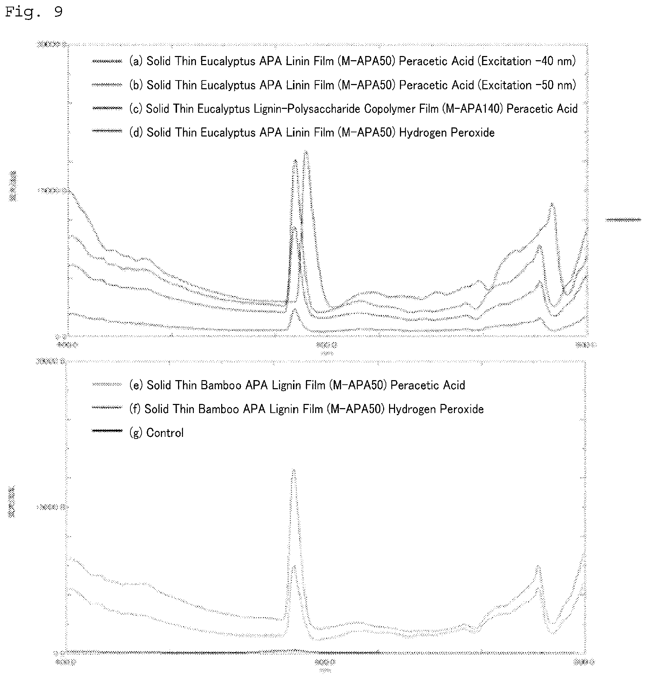

Fig. 9 shows synchronous anti-fluorescence spectra of solid thin lignin films and a solid thin lignin-polysaccharide copolymer film. Fig. 9 shows anti-fluorescence spectra (a to f) obtained by scanning an excitation wavelength and selectively detecting anti-Stokes-shifted fluorescence shorter than the excitation wavelength and control (g). The anti-Stokes shift was an excitation wavelength minus 50 nm; minus 40 nm only in spectrum (b). From the comparison between spectra (b) and (d) and the comparison between spectra (e) and (f), the anti-fluorescence intensity was found to be higher when peracetic acid, rather than hydrogen peroxide, was used as an oxidizing agent. The comparison of spectra (b) and (c) indicates that the APA lignin exhibits a higher anti-fluorescence intensity than the lignin-polysaccharide copolymer.

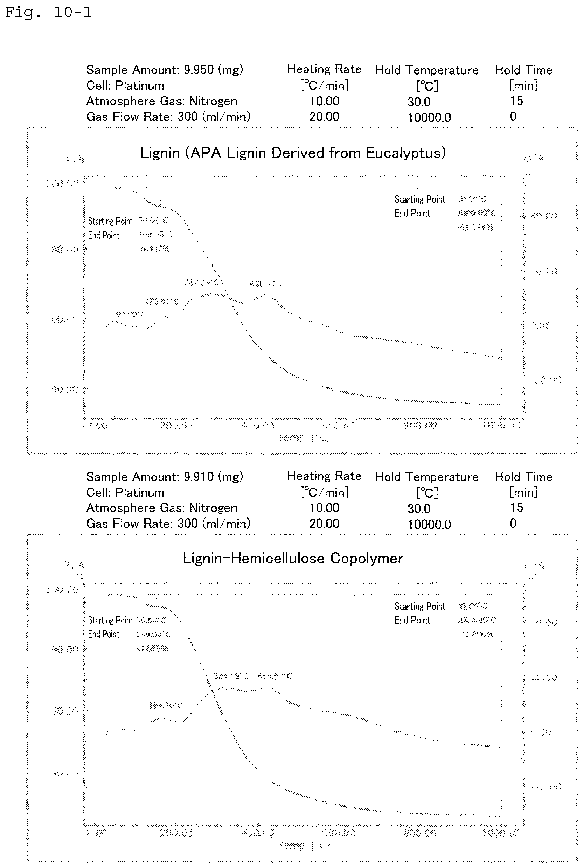

Fig. 10-1 shows the results of simultaneously performed differential thermal measurement and thermogravimetric measurement of APA lignin and a lignin-hemicellulose copolymer.

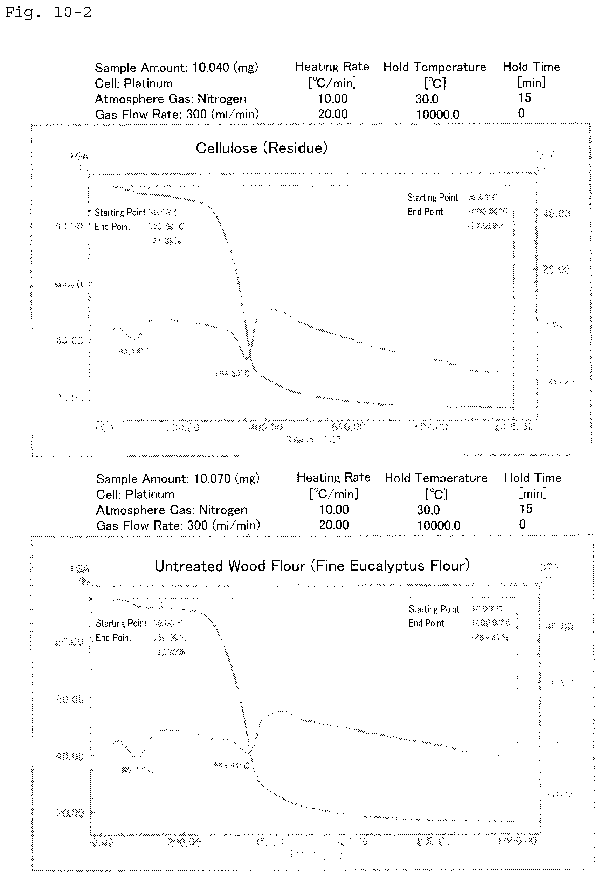

Fig. 10-2 shows the results of simultaneously performed differential thermal measurement and thermogravimetric measurement of cellulose and *eucalyptus* wood flour (raw material).

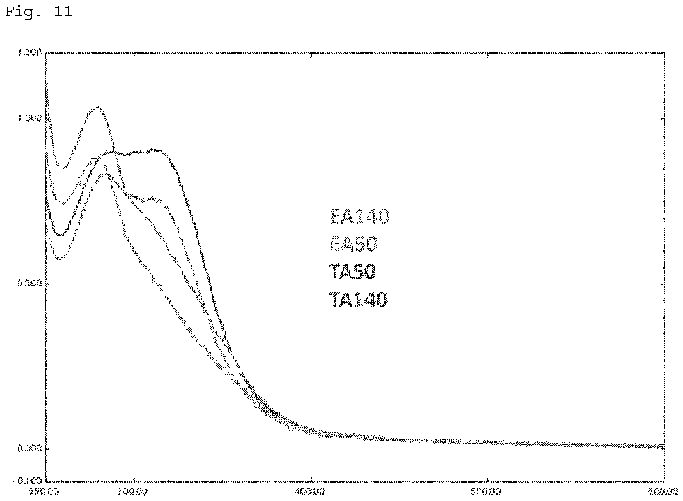

Fig. 11 shows UV absorption spectra of lignin and a lignin-hemicellulose copolymer. The vertical axis indicates absorbance, and the horizontal axis indicates wavelength (nm). For an explanation of the legend, see Table 8.

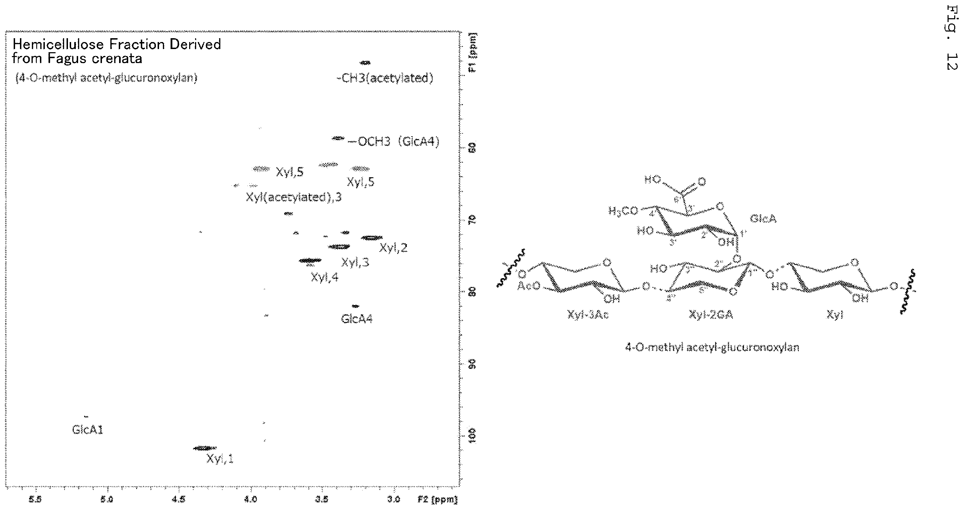

Fig. 12 shows the results of NMR measurement of the hemicellulose solution obtained in Test Example 7-1.

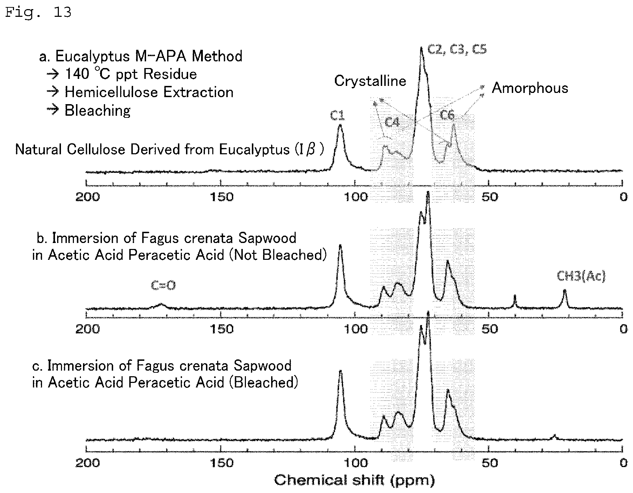

Fig. 13 shows the measurement results of solid-state CP/MAS NMR. Spectrum a is of the cellulose fiber (derived from *eucalyptus* wood flour) obtained in Test Example 7-1, and spectrum b is of the white wood chips of *Fagus crenata* obtained in Test Example 7-2, which were derived from the white wood chips that were decolorized with acetic acid, washed with water, and then lyophilized. Spectrum c is the white wood chips of *Fagus crenata* obtained in Test Example 7-2, and were derived from the white wood chips that were subjected to bleaching treatment and then lyophilized in addition to the conditions of b. Powdered white powder was added to a 4-mm pencil test tube (50 µL), and the solid-state 13C CP/MAS spectra were measured with a solid-state NMR analyzer (400 MHz, manufactured by Varian, Inc.) under an MAS condition of 15 kHz. VnmrJ 4.2 (manufactured by Varian, Inc.) was used in analysis. In the solid-state 13C CP/MAS NMR spectrum of the non-bleached wood chips of *Fagus crenata* (Fig. 13b, hemicellulose-cellulose complex), clear signals of mainly the acetyl group of acetylated glucuronoxylan, the carbonyl group (172 ppm) derived from glucuronic acid (side chain), and the methyl group (22 ppm) derived from the acetyl group were observed. The spectrum shows that hemicelluloses firmly form a complex structure with cellulose while highly retaining acetyl groups and side chains.

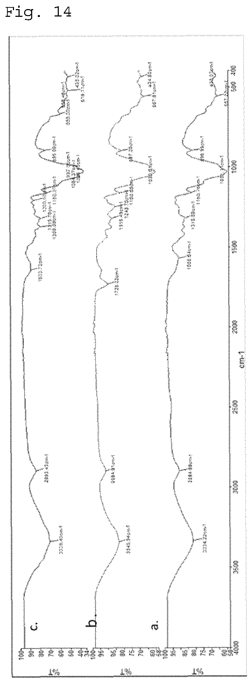

Fig. 14 shows the FT-IR measurement results of the white wood chips obtained in Test Example 7-2. Details of a to c are as described in Fig. 13. The measurement conditions were as follows. Perkin Elmer FT-IR instrument: Spectrum Two, Diamond ATR; measurement of white cellulose powder; 400 to 4000 cm⁻¹; number of scans: 10.

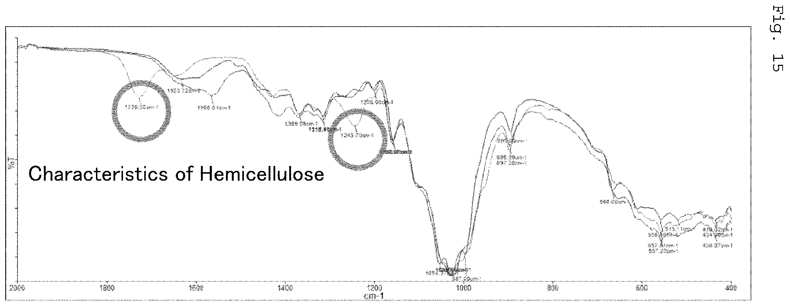

Fig. 15 is an enlarged view of a portion of Fig. 14. The areas surrounded by a circle show a peak characteristic of a hemicellulose. In spectrum b, the following were clearly confirmed: C=O stretching vibration derived from the acetyl groups of acetylated glucuronoxylan and C=O stretching vibration of glucuronic acid at 1728 cm⁻¹; and C-O stretching vibration of acetylated glucuronoxylan and glucuronic acid at 1243 cm⁻¹.

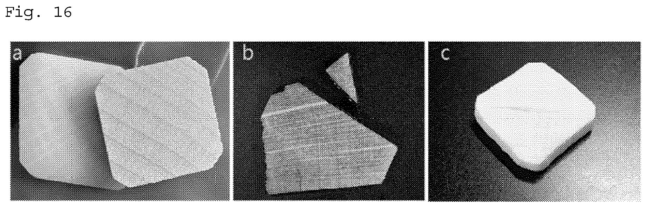

Fig. 16 shows photographic images of the white wood chips and the processed products thereof obtained in Test Example 7-2. Photograph a shows a wood chip that was treated with acetic acid peracid and then decolorized with acetic acid on the left, and a wood chip before being subjected to the alkali treatment in Test Example 7 on the right. Photograph b shows the wood chip on the left of photograph a that was bleached and washed with water. Photograph c shows the wood chip on the left of photograph a that was lyophilized.

### Description of Embodiments

In the present specification, the terms "comprise," "contain," and "include" include the concepts of comprising, containing, including, consisting essentially of, and consisting of.

### 1. Isolation Method

In one embodiment, the present invention relates to a method for isolating from plant biomass at least one member selected from the group consisting of lignin, hemicelluloses, lignin-polysaccharide complexes, cellulose, and hemicellulose-cellulose complexes, the method comprising step (A) of bringing a solution containing an organic acid and a peracid into contact with plant biomass. (In the present specification, this method may be referred to as "the isolation method of the present invention.") The details are described below.

The isolation method of the present invention comprises step (A), whereby high-quality (low-condensation) lignin with a high content of the β-O-4 ether type structure among all of the binding modes between the monolignols can be obtained.

The plant biomass may be any plant biomass that contains at least one member selected from the group consisting of lignin, hemicelluloses, lignin-polysaccharide complexes, cellulose, and hemicellulose-cellulose complexes. Examples of the plant biomass include a plant body itself and a mechanically processed product of a plant body.

Examples of the plant body include softwood materials, hardwood materials, and non-wood materials. Specific examples include softwood materials of, for example, *Cryptomeria japonica,* pine, *Picea jezoensis, Larix kaempferi, Pinus thunbergii, Abies sachalinensis, Pinus parviflora, Taxus cuspidata, Thuja standishii, Picea polita, Picea alcokiana, Podocarpus macrophyllus, Abies firma, Chamaecyparis pisifera, Pseudotsuga japonica, Thujopsis dolabrata* var. *dolabrata, Thujopsis dolabrata* var. *hondae, Tsuga sieboldii, Tsuga diversifolia, Chamaecyparis obtusa, Taxus cuspidata, Cephalotaxus harringtonia, Picea jezoensis* var. *hondoensis,* yellow cedar (*Callitropsis nootkatensis*)*,* Lawson cypress (*Chamaecyparis lawsoniana*)*,* Douglas fir (*Pseudotsuga menziesii*)*,* Sitka spruce (*Picea sitchensis*)*, Pinus radiata,* eastern spruce, eastern white pine, western larch, western fir, western hemlock, and tamarack; hardwood materials of, for example, *Populus Tremuloides,* American black cherry, *Liriodendron tulipifera,* walnut, kaba-zakura, *Zelkova serrata,* sycamore, silver cherry, *Fraxinus mandshurica, Tectona grandis,* Chinese elm, Chinese maple, *Quercus, Fagus crenata,* hard maple, hickory, *Carya illinoinensis, Fraxinus americana,* white oak, white birch, red oak, acacia, and eucalyptus; and non-wood materials of, for example, *Oryza sativa, Saccharum officinarum,* barley, wheat, maize, pineapple, oil palm, *Hibiscus cannabinus,* cotton, alfalfa, *Phleum pratense,* bamboo, *Sasa,* bamboo, and sugar beet.

Examples of the mechanically processed product of a plant body include logs, rectangular lumbers, boards, solid wood, wood materials, engineered wood, laminated veneer lumbers, plywood, wooden board, particle board, fiber board, wood chips, particulate wood materials (e.g., chips, particles, and wood flour), fibrous wood materials, compressed materials, and crushed materials.

The plant biomass is preferably wood flour from the viewpoint of being able to improve the yield. The volume average particle size of wood flour is, for example, 500 um or less, preferably 200 um or less, more preferably 100 um or less, even more preferably 50 um or less, and still more preferably 20 um or less. The lower limit of the average particle size may be any value and can be, for example, 1 um, 2 um, or 5 um. By using wood flour with a relatively small particle size, a high yield can be achieved without the alkali treatment described below.

Wood flour can be obtained by pulverizing plant biomass. Pulverization can be performed following or in accordance with known methods, for example, by using various types of mills (e.g., ball mills and mixer mills).

The plant biomass is preferably an alkali-treated material of a plant body or an alkali-treated material of a mechanically processed product of a plant body from the viewpoint of being able to improve the yield. According to the present invention, the use of the alkali-treated material makes it possible to efficiently obtain the target product without performing pulverization treatment (even when the specific surface area is relatively large, as is the case with wood chips). The alkali-treated material can be obtained by subjecting a plant body or a mechanically processed product thereof to alkali treatment. Alkali treatment can improve the yield by causing loosening of the plant cell wall structure (reducing intermolecular interactions and cleaving hydrogen bonds) and by cleaving intramolecular ester bonds. This allows a high yield to be achieved without physical pulverization of plant biomass or with a low degree of physical pulverization of plant biomass, thereby reducing process costs. Furthermore, the yield can be improved by 1.2 to 2 times. Moreover, the cellulose fibers obtained through the alkali treatment have improved crystallinity.

Specifically, the alkali treatment is preferably, for example, step (X) of bringing the plant body or the mechanically processed product thereof into contact with an alkaline solution.

The alkaline solution may be any alkaline solution as long as the above object can be achieved. For example, the alkaline solution can be a solution with a pH of 12 to 15. The pH of the solution is preferably 13 to 14. The alkaline solution can also be, for example, a solution containing 0.3 to 2 mass% (preferably 0.7 to 1.5 mass%) of an alkali metal hydroxide (sodium hydroxide, potassium hydroxide, etc.).

The amount of the alkaline solution for use may be any amount as long as the above object can be achieved. The alkaline solution can be used in an amount of, for example, 3 to 20 mL, and preferably 5 to 12 mL, per 1 g of the plant body or the mechanically processed product thereof.

The contact mode between the plant body or the mechanically processed product thereof and the alkaline solution may be any mode. From the viewpoint of, for example, treatment efficiency, it is preferable to immerse the plant body or the mechanically processed product thereof in the alkaline solution.

The temperature of the alkaline solution may be any temperature as long as the above object can be achieved. The temperature of the alkaline solution can be, for example, 20 to 150°C, preferably 50 to 120°C, and more preferably 80 to 120°C. When heating is performed, examples of the heating method include an internal heating method using microwave heating, and an external heating method using an oil bath etc. Preferred is an internal heating method using microwave heating.

The treatment time in step (X) is not limited as long as the above object can be achieved. The treatment time is, for example, 5 to 120 minutes, and preferably 15 to 60 minutes.

After step (X), the soluble part and the insoluble part are separated, and the insoluble part can be subjected to step (A) as an alkali-treated material of a plant body or an alkali-treated material of a mechanically processed product of a plant body.

Plant biomasses can be used singly or in a combination of two or more.

The solution containing an organic acid and a peracid (an organic acid-peracid solution) may be any solution that contains an organic acid and a peracid, and that is capable of extracting and solubilizing at least one member selected from the group consisting of lignin, hemicelluloses, and lignin-polysaccharide complexes.

Examples of the organic acid include, but are not limited to, acetic acid, formic acid, glyoxylic acid, maleic acid, propionic acid, folic acid, isobutyric acid, valeric acid, isovaleric acid, pyruvic acid, oxalic acid, malonic acid, succinic acid, glutaric acid, ketoglutaric acid, adipic acid, lactic acid, tartaric acid, fumaric acid, oxaloacetic acid, malic acid, isocitric acid, citric acid, benzoic acid, phthalic acid, isophthalic acid, terephthalic acid, hemimellitic acid, trimellitic acid, trimesic acid, mellophanic acid, prehnitic acid, pyromellitic acid, mellitic acid, methanesulfonic acid, benzenesulfonic acid, p-toluenesulfonic acid, camphorsulfonic acid, p-toluenesulfinic acid, and benzenesulfinic acid. Among these, preferred are acetic acid, formic acid, glyoxylic acid, 3-oxopropanoic acid, 2-methyl-3-oxopropanoic acid, and the like, more preferred are acetic acid, formic acid, glyoxylic acid, and the like, and particularly preferred is acetic acid.

The organic acids can be used singly or in a combination of two or more.

The peracid may be any acid that contains a hydroperoxide group (-O-OH). Examples of peracids include organic peroxo acids such as percarboxylic acid, and persulfuric acid, percarbonic acid, perphosphoric acid, and peroxo-perhalogenic acid. Examples of percarboxylic acids include peracetic acid, performic acid, perbenzoic acid, and metachloroperbenzoic acid. Examples of peroxo-perhalogenic acid include peroxo-perchloric acid, peroxo-perbromic acid, and peroxo-periodic acid. In addition to the above, examples of peracids include hydrogen peroxide, lithium peroxide, sodium peroxide, potassium peroxide, sodium percarbonate, urea peroxide, sodium perborate, tert-butyl hydroperoxide, cumene hydroperoxide, di-tert-butyl peroxide, dimethyldioxirane, acetone peroxide, methyl ethyl ketone peroxide, and hexamethylene triperoxide diamine. Among these, preferred are organic peroxo acids, hydrogen peroxide, sodium percarbonate, urea peroxide, sodium perborate, and the like, more preferred are percarboxylic acids (in particular, peracetic acid), hydrogen peroxide, and the like, and particularly preferred is hydrogen peroxide.

The peracids can be used singly or in a combination of two or more.

The organic acid content in the organic acid-peracid solution is, for example, 5 to 30 mol/L, preferably 8 to 25 mol/L, and more preferably 10 to 20 mol/L. The organic acid content in the organic acid-peracid solution is preferably 3 to 10 g, more preferably 4 to 8 g, and even more preferably 5 to 7 g, per 1 g of the plant biomass to be brought into contact with the organic acid-peracid solution.

The peracid content in the organic acid-peracid solution is, for example, 0.05 to 3 mol/L, preferably 0.08 to 2.5 mol/L, and more preferably 0.1 to 2 mol/L. The peracid content in the organic acid-peracid solution is preferably 0.03 to 0.1 g, more preferably 0.04 to 0.08 g, and even more preferably 0.05 to 0.07 g, per 1 g of the plant biomass to be brought into contact with the organic acid-peracid solution.

The contact mode between the plant biomass and the organic acid-peracid solution may be any mode. From the viewpoint of, for example, treatment efficiency, it is preferable to immerse the plant biomass in the organic acid-peracid solution.

The temperature of the organic acid-peracid solution may be any temperature as long as at least one member selected from the group consisting of lignin, hemicelluloses, and lignin-polysaccharide complexes can be extracted and solubilized. The temperature of the organic acid-peracid solution is, for example, 15 to 160°C (preferably 40 to 160°C). By setting the temperature to be approximately within the above range, high-quality (low-condensation) lignin with a high content of the β-O-4 ether type structure among all of the binding modes between the monolignols, and a complex of this lignin and a polysaccharide, can be obtained. In step (A), a lignin-polysaccharide complex tends to be obtained when treatment is performed at a higher-temperature side, while lignin alone tends to be obtained when treatment is performed at a lower-temperature side. For example, when the starting material is wood-based biomass, lignin alone is more likely to be selectively obtained by performing step (A) using the organic acid-peracid solution at a temperature of, for example, 90°C or lower (preferably 40 to 90°C, more preferably 40 to 70°C, and even more preferably 40 to 60°C), while a lignin-polysaccharide complex is more likely to be obtained by performing step (A) using the organic acid-peracid solution at a temperature of, for example, higher than 90°C and 160°C or lower (preferably 100 to 160°C, more preferably 120 to 160°C). For example, when the starting material is herbaceous biomass, lignin alone is more likely to be selectively obtained by performing step (A) using the organic acid-peracid solution at a temperature of, for example, 60°C or lower (preferably 15 to 60°C), while a lignin-polysaccharide complex is more likely to be obtained by performing step (A) using the organic acid-peracid solution at a temperature of, for example, higher than 60°C and 150°C or lower (preferably 70 to 150°C). When heating is performed, examples of the heating method include an internal heating method using microwave heating, and an external heating method using an oil bath etc. Preferred is an internal heating method using microwave heating. Rapid internal heating with microwaves enables quick and efficient pretreatment.

The treatment time in step (A) is not limited as long as the above object can be achieved. The treatment time is, for example, 1 to 60 minutes, preferably 1 to 30 minutes, and more preferably 5 to 20 minutes.

In step (A), microwave treatment is preferably performed while the biomass is immersed in the solution. This improves the lignin yield. The conditions for microwave treatment can be set as appropriate. For example, a commercially available microwave synthesizer can be used while stirring the solution. The microwave treatment time can be, for example, 1 to 30 minutes, and preferably about 10 minutes. The isolation method of the present invention can also easily be constructed as a continuous system as well as a batch system, since the microwave treatment, when performed, requires only a relatively short irradiation time.

In step (A), it is preferable to irradiate the plant biomass with microwaves or ultrasonic waves from the viewpoint of being able to promote penetration of the solution into the internal pits inside the plant cell wall and being able to attempt to improve the yield. The irradiation time is the same as described above.

Step (A) may be performed in multiple stages with varying conditions, if necessary. For example, step (A) can be performed by varying the temperature of the solution. In this case, the temperature of the solution is preferably higher in the next stage when the temperature is compared between one specific stage and the next stage. For example, step (A) can comprise step (A1) of bringing a solution at a temperature of 90°C or lower containing an organic acid and a peracid into contact with plant biomass, and/or step (A2) of bringing a solution at a temperature higher than 90°C and 160°C or lower containing an organic acid and a peracid into contact with plant biomass. The "plant biomass" in step (A2) includes the insoluble part obtained in step (A1).

In step (A1), lignin alone can be selectively extracted and solubilized, and in step (A2), a lignin-polysaccharide complex can be extracted and solubilized. For this reason, by performing step (A1) and step (A2) in this order, lignin alone and a lignin-polysaccharide complex can be efficiently obtained.

After step (A), a separating solvent is added, if necessary, and then the soluble part and insoluble part are separated. The method of separating the soluble part from the insoluble part may be any method. Examples of usable methods include decantation, spin-down, and filtration. The separating solvent may be dioxane, ethanol, acetone, acetonitrile, DMSO, DMF, NMI, ethyl acetate, methanol, butanol, various other alcohols, acetic acid, water, and mixed solvents thereof. By using these, lignin and lignin-hemicellulose copolymers are separated. Preferred are organic solvents of acetone, ethanol, and acetonitrile, and mixtures of 10 to 20 v/v% organic solvents in water, from the viewpoint of extraction efficiency, selectivity, and environmental burden.

The use of an extraction solvent (acetic acid-peracetic acid) that does not contain water or a separating solvent that does not contain water makes it possible to obtain a highly pure lignin-hemicellulose copolymer. When water-containing solvents are used, hemicellulose components, which are polysaccharides, are also partly obtained at the same time. For hydrolysis reactions, a catalyst that accelerates the reaction in the presence of an acid or alkali can also be used.

The soluble part obtained in step (A) contains at least one member selected from the group consisting of lignin, hemicelluloses, and lignin-polysaccharide complexes. Thus, the soluble part can be obtained as at least one member selected from the group consisting of lignin, hemicelluloses, and lignin-polysaccharide complexes, either as is or through other treatments, if necessary.

Examples of the other treatments include the following. After step (A), water can be removed by evaporation and/or lyophilization, if necessary, to obtain the target product as a dry powder. If desalting is necessary, the concentrated solution may be extracted, for example, with alcohol or acetone, and the solvent may be distilled off. This allows the target product to be obtained as a dry powder.

To selectively obtain lignin, for example, lignin can be obtained from the soluble part obtained in step (A1).

To selectively obtain a lignin-polysaccharide complex, for example, a lignin-polysaccharide complex can be obtained from the soluble part obtained in step (A2), in which the insoluble part obtained in step (A1) is used as plant biomass.

To obtain a hemicellulose, for example, a hemicellulose can be obtained by subjecting a lignin-polysaccharide complex to alkaline hot-water extraction. If necessary, a hemicellulose can be purified by means of ethanol precipitation, ion-exchange columns, gel filtration, hydrophobic chromatography, etc.

A hemicellulose can also be obtained by the step of bringing the insoluble part obtained in step (A) (preferably step (A1)) into contact with a solution for hemicellulose extraction obtained by adding a peracid (the type and final concentration are as described above in the explanation of step (A)) to an alkaline solution (the formulation etc. of the solution are as described above in the explanation of step (X)). The contact conditions are as described above in the explanation of step (A). A hemicellulose can be obtained by subjecting the soluble part obtained in this step to purification (e.g., dialysis), water removal, etc., as necessary. On the other hand, from the insoluble part obtained in this step, cellulose (cellulose fibers) can be obtained by bleaching, washing, etc., as necessary.

The insoluble part obtained in step (A) contains cellulose. Thus, the insoluble part can be obtained as cellulose, either as is or through the other treatments described above, if necessary. For example, a hemicellulose can be extracted from the insoluble part by subjecting it to alkaline hot-water extraction. However, if the object is to obtain type-I cellulose, it is preferable not to treat the insoluble part with a high-concentration alkaline solution in order to avoid mercerization of cellulose.

When lignin is selectively isolated from the plant biomass in step (A1), the insoluble part (residue) contains a hemicellulose-cellulose complex. When a material having a specific shape (e.g., wood chip) is used as the plant biomass, the hemicellulose-cellulose complex is obtained as a material piece with relatively high strength. A white material piece can be obtained by decolorizing (immersing in an organic acid solution, washing, bleaching, etc.) the material piece.

As a novel process for producing paper pulp with low energy and no harmful effluents, the present invention can provide a novel method for pretreating plant biomass, the method being a low-temperature, mild process with sufficiently delignified polysaccharides, so that the recovered product contains a further reduced amount of inhibitory substances that cause problems in ethanol fermentation.

### 2. Lignin, Lignin-polysaccharide Complex, Cellulose, and Hemicellulose-cellulose Complex

The isolation method of the present invention makes it possible to obtain lignin characterized by at least having a content of the β-O-4 ether type structure of 50% or more and a solubility in 60 to 80% ethanol at 25°C of 2 w/v% or more.

The isolation method of the present invention makes it possible to obtain a lignin-polysaccharide complex characterized by at least containing at least one bond selected from the group consisting of an α-ether bond between lignin and polysaccharide, an α-ester bond between lignin and polysaccharide, and a γ-ester bond between lignin and polysaccharide.

The isolation method of the present invention makes it possible to obtain cellulose characterized by at least containing a further reduced amount of inhibitory substances that cause problems in ethanol fermentation.

The isolation method of the present invention makes it possible to obtain a hemicellulose-cellulose complex.

The details are described below.

### 2-1. Lignin

In one embodiment, the present invention relates to lignin having a content of the β-O-4 ether type structure of 50% or more and a solubility in 60 to 80% ethanol at 25°C of 2 w/v% or more, or relates to lignin obtainable by the isolation method of the present invention.

The lignin of the present invention refers to lignin in a state isolated from biomass (including natural lignin). The binding modes in natural lignin are diverse. Representative examples of the binding modes in natural lignin include the following.

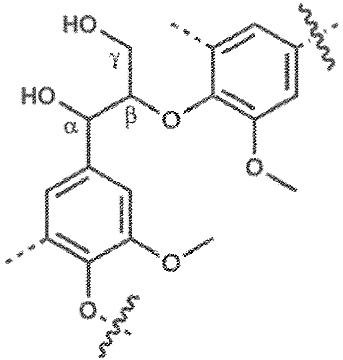

The above is called a β-O-4 bond.

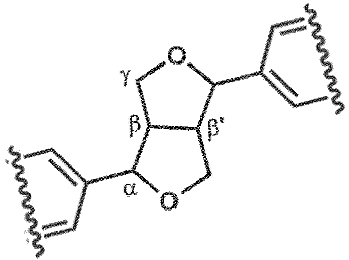

The above is called a resinol (β-β) bond.

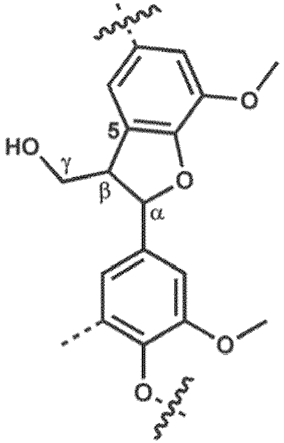

The above is called a phenylcoumaran (β-5) bond.

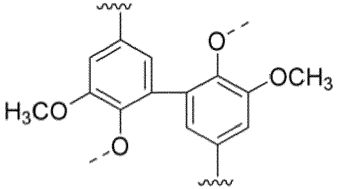

The above is called a 5-5 bond.

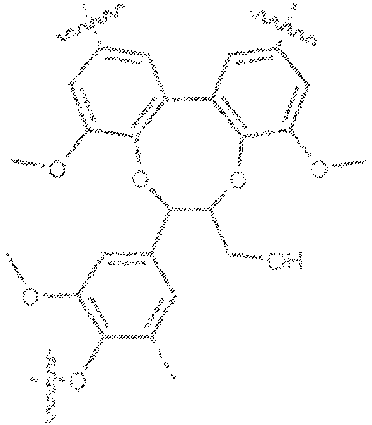

The above is called a dibenzodioxin (DBDO 5-5/4-O-β) bond.

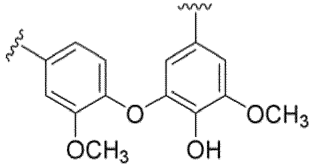

The above is called a 4-O-5 bond.

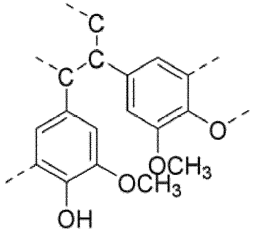

The above is called a β-1 bond.

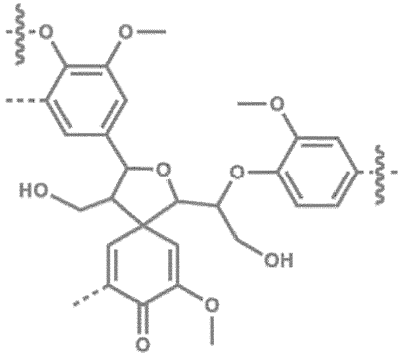

The above is called a spirodienone bond.

In natural lignin, the content of the β-O-4 ether type structure is highest among all of the binding modes between the monolignols, although it also varies depending on plant species. For example, in softwood, the content of the same is considered to be 40 to 60%. Further, in hardwood, for example, the content of the same in eucalyptus is considered to be about 45%.

In the lignin of the present invention, the content of the β-O-4 ether type structure is 50% or more, preferably 60% or more, more preferably 65 to 85%, and even more preferably 70 to 80%, among all of the binding modes between the monolignols.

In the lignin of the present invention, the content (%) of the β-O-4 ether type structure among all of the binding modes between the monolignols is preferably 1.2x% or more, more preferably 1.4x% or more, and even more preferably 1.6x% or more, with the content of the same in the lignin in the biomass used as a starting material being defined as x%. In the above, the upper limit is preferably 2x%.

The content of the β-O-4 ether type structure among all of the binding modes between the monolignols in lignin is specifically measured as follows. A sample is dissolved in deuterated dimethyl sulfoxide (DMSO-d₆) to 1 to 10 wt%, and the NMR spectrum is obtained using a Bruker Avance III 600 MHz NMR Spectrometer equipped with a low-temperature probe. The content of the β-O-4 ether type structure can be estimated from the signal volume in the HSQC (Heteronuclear single-quantum correlation spectroscopy) spectrum. The quantitative value in the two-dimensional NMR method is corrected according to a document (Okamura, H. Nishimura, T. Nagata, T. Kigawa, T. Watanabe, and M. Katahira, Accurate and molecular-size-tolerant NMR quantitation of diverse components in solution, Scientific Reports, 6, 21742, 2016) to calculate the accurate content.

The lignin of the present invention is characterized by having a solubility in 60 to 80% of 60 to 80% ethanol at 25°C of 2 w/v% or more. For this reason, by using the lignin of the present invention, a self-assembled body described below is easily obtained, and a self-assembled body with high stability can be obtained. The solubility is preferably 4 w/v% or more, more preferably 5 w/v% or more, even more preferably 6 w/v% or more, and still more preferably 7 w/v% or more.

The measurement method for the solubility is as follows. A sample is stirred and dissolved in ethanol at 25°C and the resulting product is separated into an ethanol-soluble part and ethanol-insoluble part by solid-liquid separation. An aqueous ethanol solution at 25°C (1/1 = ethanol/water) is added to the ethanol-insoluble part, and the mixture is stirred for dissolution to obtain an aqueous ethanol solution-soluble part. The aqueous ethanol solution-soluble part is mixed with the ethanol soluble part to obtain a sample solution. The amount of the aqueous ethanol solution added is adjusted so that the ethanol concentration of the sample solution is in the range of 60 to 80%. In the step of obtaining the soluble part, dispersion and solubilization are performed with an ultrasonic cleaner at 28 kHz for 3 min, if necessary. The maximum sample concentration at which the sample solution is visually transparent is defined as "solubility in 60 to 80% of 60 to 80% ethanol at 25°C."

In the lignin of the present invention, the constituent ratio of biphenyl-type lignin with a condensed structure is preferably 5% or less.

The lignin of the present invention has a number average molecular weight (Mn) of preferably 0.7 to 9 kDa, more preferably 1 to 5 kDa, and even more preferably 1.5 to 4 kDa.

The lignin of the present invention has a weight average molecular weight (Mw) of preferably 1 to 10 kDa, more preferably 1.5 to 8 kDa, and even more preferably 2 to 6 kDa.

In the present invention, the number average molecular weight (Mn) and weight average molecular weight (Mw) of lignin are specifically measured as follows. The molecular weight of lignin can be determined by size exclusion chromatography (SEC), i.e., gel permeation chromatography (GPC). A sample is dissolved in a solution of acetic anhydride and a base (e.g., pyridine) and reacted for 3 to 6 hours to obtain an acetylated product. The acetylated product is dissolved in tetrahydrofuran (THF) to a concentration of 2.0 mg/mL, and separation is performed by high-performance liquid chromatography. The columns for use are HZ-M columns (Tosoh Corporation, 150 mm × 4.6 mm id, 4 µm, three columns connected in series). The analysis is performed by injecting 10 µL of the sample at a column temperature of 40°C using tetrahydrofuran (THF) as the mobile phase at a flow rate of 0.35 mL/min. A mass calibration curve is prepared using standard polystyrene, Tosoh PStQuick C (molecular weights (MW): 2,110,000, 427,000, 37,900, and 5970), pinoresinol (MW: 352), and vanillin (MW: 152) to determine the Mw and Mn of the sample.

The lignin of the present invention has a polydispersity (Mw/Mn) of preferably 2.5 or less, and more preferably 2 or less.

### 2-2. Lignin-polysaccharide Complex

In one embodiment, the present invention relates to a lignin-polysaccharide complex containing at least one bond selected from the group consisting of an α-ether bond between lignin and polysaccharide, an α-ester bond between lignin and polysaccharide, and a γ-ester bond between lignin and polysaccharide, and relates to a lignin-polysaccharide complex obtainable by the isolation method of the present invention.

The lignin-polysaccharide complex of the present invention refers to a lignin-polysaccharide complex in a state isolated from biomass.

Examples of polysaccharides include xylan and mannan as representatives, and also include glucomannan, galactoglucomannan, glucuronoxylan, and arabinoglucuronoxylan. Hemicelluloses are mainly composed of glucomannan in softwood, glucuronoxylan in hardwood, and arabinoxylan in herbaceous plants. In the above, the monomers include xylose, arabinose, glucose, mannose, galactose, and uronic acid. The side chains include an acetyl group and a methoxy group. Hemicelluloses in herbaceous plants include one in which ferulic acid and diferulic acid are bound to the arabinose side chain of arabinoxylan.

The lignin-polysaccharide complex of the present invention is a lignin polysaccharide complex that can be homogeneously dispersed in a separating solvent and is characterized by a polymeric structure in which lignin and a polysaccharide are copolymerized by covalent bonding. The lignin-polysaccharide complex of the present invention is isolated by cleaving by a hydrolysis reaction a small portion of the bonds (less than 10% of the bonds) in the hemicellulose main chain in the lignin-polysaccharide composite structure in the plant cell wall. By performing the hydrolysis reaction under mild conditions, over-decomposition, side reactions, and molecular weight reduction can be suppressed.

The lignin-polysaccharide complex of the present invention is characterized by having at least one bond selected from the group consisting of an α-ether bond (LCα-ether bond) between lignin and polysaccharide, an α-ester bond (LCα-ester bond) between lignin and polysaccharide, and a γ-ester bond (LCγ-ester bond) between lignin and polysaccharide.

In the lignin-polysaccharide complex of the present invention, the α-ether bond (LCα ether) between lignin and polysaccharide, which is a copolymerization point, is preferably concentrated to 1.2 times or more of the original binding unit constituent ratio of biomass as a starting material.

Within the biomass, lignin and polysaccharides are also bound by non-covalent bonding. Non-covalent bonding is due to hydrophobic interactions, hydrogen bonding, electrostatic interactions, and polymer chain entanglement. Therefore, there is no clear evidence in prior studies that polymers having different properties, such as lignin and polysaccharides, form a copolymer by covalent bonding in a lignin-polysaccharide complex. Further, the preparation of lignin-polysaccharide complexes by conventional methods requires multiple stages and results in low yield (less than 5%) or low purity.

Clear evidence of copolymerization points (covalent bonding) in a lignin-hemicellulose copolymer can be confirmed by signal attribution by the HSQC method, which is a two-dimensional NMR spectroscopy (Figs. 3 and 4). Clearer evidence can be confirmed by serial correlation analysis by HMBC and TOCSY-HSQC methods. For more details, reference can be made to a document (Nishimura et al., Direct evidence for α ether linkage between lignin and carbohydrates in wood cell walls, Sci. Rep. 2018).

### LCα ether

The C-H correlation signal at the α-position of lignin (LC ether, δH/δC = 4.50±0.15 ppm/80.1+1 ppm region) and (LC ether, δH/δC = 4.95±0.2 ppm/81.5+1.5 ppm region), derived from the ether bond between the 6th position of hexose or the hydroxyl group of pentose and the α-position (benzyl) of lignin.

### LCα ester

The C-H correlation signal at the α-position of lignin (LCα ester, δH/δC = 5.88±0.15 ppm/74.0±1.5 ppm region), derived from the ester bond between the carboxy group at the 6th position of glucuronic acid (uronic acid) and the α-position (benzyl) of lignin.

### LCγ ester

The C-H correlation signal at the γ-position of lignin (LCγ ester, δH/δC = 4.0±0.15 ppm, 4.4+0.15 ppm,/64.8±1.5 ppm region), derived from the ester bond between the carboxyl group at the 6th position of glucuronic acid (uronic acid) and the γ-position of lignin.

The lignin-polysaccharide complex of the present invention is characterized by having a solubility in 60 to 80% ethanol at 25°C of 2 w/v% or more. For this reason, by using the lignin-polysaccharide complex of the present invention, a self-assembled body described below is easily obtained, and a self-assembled body with high stability can be obtained. The solubility is preferably 4 w/v% or more, more preferably 5 w/v% or more, even more preferably 6 w/v% or more, and still more preferably 7 w/v% or more.

In the lignin-polysaccharide complex of the present invention, in particular, the binding unit constituent ratio of LCα ether and LCα ester, which are copolymerization points, is preferably 5% or more, and more preferably 10% or more, based on the ratio of aromatic rings of lignin.

In the lignin-polysaccharide complex of the present invention, the constituent ratio of polysaccharides to lignin is preferably 0.1 to 2, and more preferably 0.3 to 1.

The lignin-polysaccharide complex of the present invention has a molecular weight (Mw) of preferably 2,000 to 15,000, and more preferably 3,000 to 7,000. The lignin-polysaccharide complex of the present invention has a polydispersity (Mw/Mn) of preferably 3.5 or less, and more preferably 2.5 or less.

The measurement methods for the above parameters are in accordance with the measurement methods for lignin of the present invention or the measurement methods of Examples described below.

### 2-3. Cellulose

In one embodiment, the present invention relates to cellulose that is obtainable by the isolation method of the present invention.

The cellulose of the present invention refers to cellulose in a state isolated from biomass.

The cellulose of the present invention contains a further reduced amount of inhibitory substances that cause problems in ethanol fermentation.

The cellulose of the present invention can be used in various fields, for example, as cellulose fibers, pulp for papermaking, pretreatment of plant biomass, and biofuel by saccharification and fermentation.

### 2-4. Hemicellulose-cellulose Complex

In one embodiment, the present invention relates to a hemicellulose-cellulose complex that is obtainable by the isolation method of the present invention.

The hemicellulose-cellulose complex of the present invention refers to a hemicellulose-cellulose complex in a state isolated from biomass.

The hemicellulose-cellulose complex of the present invention can be in the form of a piece of material (a piece of material having a specific shape and size). Further, the hemicellulose-cellulose complex of the present invention can be white (see Fig. 13).

The hemicellulose-cellulose complex of the present invention is obtained under mild conditions (treatment at 60°C or lower with a combination of a low-concentration alkaline solution, an organic acid, and a low-concentration peracid, or with any one of these), and thus can be obtained while retaining the natural hemicellulose structure. For example, in terms of hardwood, it is a hemicellulose-cellulose complex containing a hemicellulose in which an acetyl group and a glucuronic acid side chain are highly retained (see Fig. 13, Fig. 14, and Fig. 15).

The hemicellulose-cellulose complex of the present invention can be used in various fields, for example, for a heat-insulating material, a lightweight carbon material, acoustics, soundproofing, and a piezoelectric element.

Further, the hemicellulose-cellulose complex of the present invention can be formed into a transparent material by impregnating a resin. From this viewpoint, in one embodiment, the present invention relates to a transparent material comprising the hemicellulose-cellulose complex of the present invention and a resin. The resin impregnation method and the resin for use can be selected according to known information (e.g., JP2020-515437). For example, the resin can be selected from poly(methyl methacrylate) (PMMA), epoxy, poly(glycidyl methacrylate) (PGMA), polydimethylsiloxane (PDMS), and polystyrene (PS), each having a refractive index of 1.4 to 1.6 or 1.45 to 1.55, or copolymers or mixtures thereof.

### 3. Self-assembled Body

In one embodiment, the present invention relates to at least one self-assembled body selected from the group consisting of the lignin of the present invention and the lignin-polysaccharide complex of the invention.

The self-assembled body of the present invention may have any shape. The self-assembled body of the present invention can be, for example, in a sheet form (e.g., a paint film, a coating film), a particulate form (e.g., fine particles, agglomerates).

The lignin of the present invention and the lignin-polysaccharide complex of the present invention can form a self-assembled body. Self-assembly occurs easily, and the conditions for causing the self-assembly can be set appropriately based on known conditions. For example, the self-assembled body in a sheet form can be obtained by applying an aqueous solution containing at least one member selected from the group consisting of the lignin of the present invention and the lignin-polysaccharide complex of the present invention to a solid surface and evaporating the solvent of the aqueous solution.

In the above, the aqueous solution for use can be, for example, a mixture of an organic solvent (the separating solvent mentioned above can be used), such as alcohol (preferably ethanol) or acetonitrile, and water. Specifically, for example, a mixture of ethanol and water can be used. The mixing ratio in the mixture is not limited and can be set as appropriate. For example, ethanol:water (volume ratio) can be 5:95 to 40:60.

The self-assembled body of the present invention exhibits fluorescence in the long-wavelength region. Specifically, the self-assembled body of the present invention exhibits fluorescence in the wavelength range of 400 nm to 700 nm. Further, in the self-assembled body of the present invention, in particular, fluorescence shifted to significantly shorter wavelength compared with the excitation wavelength, i.e., anti-Stokes fluorescence, is observed. Anti-Stokes fluorescence is observed even with an excitation light source weaker than a conventional light source, such as a xenon lamp. For this reason, the self-assembled body of the present invention can be used as a phosphor (preferably a phosphor that exhibits anti-Stokes fluorescence). Specifically, the self-assembled body of the present invention can be used as an anti-Stokes fluorescent agent. In this case, for example, an agent containing the self-assembled body of the present invention can be used as an anti-Stokes fluorescent paint, ink, and identifier, as well as an upconversion/wavelength conversion molecular material.

The self-assembled body of the present invention can be stably dispersed in an aqueous solution and can maintain the fluorescence described above even in a dried solid.

### 4. Ultraviolet Absorber

The lignin of the present invention and the lignin-polysaccharide complex of the present invention can strongly absorb ultraviolet rays, in particular, UV-B and UV-C. From this viewpoint, in one embodiment, the present invention relates to an ultraviolet absorber containing at least one member selected from the group consisting of the lignin of the present invention and the lignin-polysaccharide complex of the present invention.

The ultraviolet absorber of the present invention can prevent ultraviolet deterioration of a polymer, for example, by mixing with the polymer. In addition, the ultraviolet absorber of the present invention can be used to protect the skin from ultraviolet rays by mixing with a composition for external use.

### Examples

The present invention will be described below with reference to Examples. However, the invention is not limited to these Examples. Unless otherwise specified, the unit in the tables represents mass.

### Test Example 1: Isolation of Lignin, Lignin-polysaccharide Complex, Hemicellulose, and Cellulose

Lignin, lignin-polysaccharide complexes, hemicelluloses, and cellulose were isolated from biomass according to an M-APA method, an A-APA method, or these methods with altered conditions. The yield, the physical properties, etc. of the isolated products were measured. The isolation methods according to the present invention are capable of isolating soluble lignin, lignin-polysaccharide complexes, hemicelluloses, and cellulose from natural polymers in biomass with high efficiency, and includes step (A) of bringing a solution containing an organic acid and a peracid into contact with plant biomass. Specifically, the isolation was performed as described below.

### Test Example 1-1: Preparation of Finely Milled Wood Flour

A fine powder (finely milled wood flour) with a volume average particle size of 10 um (1 to 100 um) was prepared from wood flour of hardwood (*eucalyptus* or *Fagus crenata*)*,* softwood (*Pinus densiflora, Cryptomeria japonica,* or *Chamaecyparis obtusa*)*,* or a herbaceous plant (Bagasse (sugarcane) or bamboo) by using a ball mill or bead mill method.

An example of preparation methods using a ball mill is described below. A planetary ball mill (P-6, Fritsch GmbH) was used. 2 g of wood flour and 100 g of zirconia beads with a diameter of 3 mm were placed in an 80-cc agate container and sealed in two overpots. After the overpots were vacuumed for 20 minutes, nitrogen gas (inert gas) was injected. A cycle composed of milling for 1 minute and a pause for 1 minute and 20 seconds was performed 180 times at 550 rpm (3 hours in total). The operation under the above conditions provides a fine wood flour while limiting oxidation during milling and denaturation due to heating.

### Test Example 1-2: Preparation of Wood Flour

1 g of wood flour or wood chips (10 mm × 10 mm × 1 mm) of hardwood (*eucalyptus* or *Fagus crenata*)*,* softwood (*Pinus densiflora, Cryptomeria japonica,* or *Chamaecyparis obtusa*)*,* or a herbaceous plant (Bagasse (sugarcane) or bamboo) was placed in the left and right two pots of a mixer mill (MM301, Retsch). Under the conditions of a grinding time of 5 minutes and a frequency of 1/15 sec, milling was performed, thereby obtaining a powder (wood flour) with a volume average particle size of 0.1 mm.

### Test Example 1-3: M-APA Method (Milling-Acid-PerAcid Method)

For a starting material, the finely milled wood flour (average particle size: 10 um) obtained in Test Example 1-1 was used. 2 g of finely milled wood flour and 10 mL of a solution containing acetic acid and peracetic acid (composition: 17.4M acetic acid 99%, 0.14M peracetic acid less than 1%, 0.01M hydrogen peroxide, and a trace amount of water) were placed in a vial for the Initiator and irradiated with microwaves for 10 minutes at 50°C, initial power of 400 W, and stirring speed of 600 rpm with an Initiator+ 60 microwave synthesizer (Biotage). After the soluble part was treated with microwaves, 10 mL of a separating solvent (acetone) was added, followed by separation by spin-down (RCF 8000 × g, 5 min). The insoluble part was extracted with 10 mL of a separating solvent (acetone) and washed three times, and combined with the soluble part. This soluble lignin is referred to as acid peracid lignin (APA lignin).

The insoluble part was subjected to the same extraction operation with the microwave heating condition changed to 140°C as the second step. The soluble part is referred to as a lignin-hemicellulose copolymer. An insoluble part containing cellulose as a main component was obtained.

### Test Example 1-4: A-APA Method (Alkali-Acid-PerAcid Method)

For a starting material, the wood flour (average particle size: 0.1 mm) obtained in Test Example 1-2 was used. A 0.25M sodium hydroxide solution was prepared (1N diluted 4 times). 2.4 mL of the 0.25 M sodium hydroxide solution was added to 0.3 g of wood flour, followed by microwave extraction treatment (100°C, 30 min). A rough indication of the required amount of an alkali is 1 mmol of NaOH per gram of wood flour.

After microwave treatment, the soluble part and the insoluble part can be easily separated by decantation, spin-down, or filtration. Extraction with acetone (separating solvent) was additionally performed three times, and the extract was combined with the soluble part. From the insoluble part, acid peracid lignin (APA lignin) and a lignin-hemicellulose copolymer were obtained as soluble lignin according to the same extraction method as the M-APA method of Test Example 1-3. An insoluble part containing cellulose as a main component was obtained.

### Test Example 1-5: Study of Conditions

Instead of acetic acid, other organic acids (formic acid, glyoxylic acid) were used for the study. Additionally, another peracid (hydrogen peroxide) was used instead of peracetic acid. For another peracid (hydrogen peroxide), the composition was changed as follows: acetic acid 12M, and hydrogen peroxide concentrations shown in the following table.

The study was conducted by changing the temperature at which plant biomass or an insoluble part comes in contact with an organic acid and a peracid to a temperature ranging from room temperature to 180°C. Additionally, at this time, the heating method was also changed from the internal heating method using microwave heating to an external heating method using an oil bath in conducting the study.

### Test Example 1-6: Analysis and Measurement Method

Lignin, lignin-polysaccharide complexes, and cellulose were analyzed and measured according to the following methods.

### Test Example 1-6-1: Measurement Method for Molecular Weight (Mn, Mw, and Degree of Polydispersity)

The molecular weight was determined by size exclusion chromatography (SEC), i.e., gel permeation chromatography (GPC). A sample was dissolved in a solution of acetic anhydride and a base (e.g., pyridine) and reacted for 3 to 6 hours to obtain an acetylated product. The acetylated product was dissolved in tetrahydrofuran (THF) to a concentration of 2.0 mg/mL, and separation was performed by high-performance liquid chromatography (high-pressure gradient SEC analysis system manufactured by Shimadzu Corporation). The columns for use were HZ-M columns (Tosoh Corporation, 150 mm × 4.6 mm id, 4 um, three columns connected in series). The analysis was performed by injecting 10 µL of the sample at a column temperature of 40°C using tetrahydrofuran (THF) as the mobile phase at a flow rate of 0.35 mL/min. A mass calibration curve was prepared using standard polystyrene, Tosoh PStQuick C (molecular weights (MW): 2,110,000, 427,000, 37,900, and 5970), pinoresinol (MW: 352), and vanillin (MW: 152) to determine the weight average molecular weight Mw and the number average molecular weight Mn of the sample. The degree of polydispersity was determined as Mw/Mn.

### Test Example: 1-6-2: Method for Calculating Constituent Ratio of Binding Units in Molecule

Samples were dissolved in deuterated dimethyl sulfoxide (DMSO-d₆) to 1 to 10 wt%, and their NMR spectra were obtained using a Bruker Avance III 600 MHz NMR Spectrometer equipped with a low-temperature probe. The constituent ratio of the interunit binding units of lignin was calculated from the volume of signals on the spectra of heteronuclear single-quantum correlation spectroscopy (HSQC). The constituent ratio was calculated as a ratio per 100 aromatic rings of lignin. The content of the ether binding unit was estimated from the sum of the integrated values of the C-H correlation signal at the β position (6H/6C = the region of 4.0 ± 0.2 ppm/85.6 ± 1.2 ppm, δH/δC = the region of 4.3 ± 0.2 ppm/83.0 ± 0.7 ppm). The quantitative value in the two-dimensional NMR method was corrected according to the TAF method described in a document (Okamura, H. Nishimura, T. Nagata, T. Kigawa, T. Watanabe, and M. Katahira, Accurate and molecular-size-tolerant NMR quantitation of diverse components in solution, Scientific Reports, 6, 21742, 2016) to calculate the accurate content.

Because the region to be integrated is slightly shifted depending on the sample and the measurement environment, the signal integration region was appropriately adjusted at the time of analysis (this point also applies in the other measurement methods described in this specification).

### Test Example 1-6-3: Method for Calculating Constituent Ratio of Lignin and Polysaccharides

The sum of integrated values of the C-H correlation signals at the anomeric position (first position) of polysaccharides was calculated according to the NMR method described above and corrected according to the TAF method, followed by calculating the ratio per 100 aromatic rings of lignin.

### Test Example 1-6-4: Method for Calculating Constituent Ratio of Lignin-polysaccharide Copolymerization Point

In the same manner as described above, the sum of integrated values of the C-H correlation signals derived from the binding units of the LCα ether and the LCα ester (LC ether, δH/δC = the region of 4.50 ± 0.15 ppm/80.1 ± 1 ppm; LC ester, δH/δC = the region of 5.88 ± 0.15 ppm/74.0 ± 1.5 ppm) was calculated according to the 2D HSQC NMR method and corrected according to the TAF method, followed by calculating the ratio per 100 aromatic rings of lignin. In the A-APA method, although some of the ester bonds are hydrolyzed by an alkali treatment, an LCα ester-type lignin-hemicellulose copolymer can also be obtained.

### Test Example: 1-6-5: Method for Calculating Yield from Raw Material Biomass

Each of the obtained components was confirmed with a pH meter, pH test paper, or peracid test paper (potassium iodide starch paper), and then neutralized and subjected to peracid quenching as necessary. Neutralization was performed by adding 1N HCl or 1N NaOH in small amounts stepwise. Peracid quenching was performed by adding a 1M aqueous sodium sulfite solution dropwise. The organic solvent was distilled off by using an evaporator. Subsequently, a dry powder was obtained by lyophilization. When a salt was produced by neutralization, the concentrated solution obtained after distillation of the organic solvent was re-extracted with a separating solvent (acetone) and desalted. Thereafter, the solvent was distilled off again with an evaporator, and lyophilization was performed, thereby obtaining a dry powder. Each of the obtained components was weighed, and the yield per raw material biomass was calculated.

### Results

A polymer with a desirable molecular structure, molecular weight, and yield can be obtained under the following conditions. Tables 1 to 7 show the results.

Table 1 shows the peracid conditions and the yield of each component of polymeric lignocellulose in the two-stage microwave extraction reaction according to the M-APA method (wt%, raw-material biomass ratio, raw material: *eucalyptus*)*.*

**Table 1**

| Peracid Concentration Conditions | Peracetic Acid 1% | H₂O₂ 0.4% | H₂O₂ 3.2% | H₂O₂ 4.2% |
|---|---|---|---|---|
| | 0.14 mol/L | 0.11 mol/L | 1.0 mol/L | 1.4 mol/L |
| APA Lignin | 7 | 6 | 9 | 11 |
| Lignin-hemicellulose Copolymer | 12 | 11 | 14 | 25 |
| Residual Cellulose | 79 | 82 | 75 | 63 |
| Total Yield | 98 | 98 | 98 | 99 |

Table 2 shows the yield of each component of polymeric lignocellulose of various kinds of biomass in the two-stage microwave extraction reaction according to the A-APA method (wt%, raw-material biomass ratio).

**Table 2**

| | Hardwood | | | Softwood | | Herbaceous Plant | |
|---|---|---|---|---|---|---|---|
| Raw-material Biomass Plant Species | Eucalyptus | Fagus crenata | Pinus densiflora | Cryptomeria japonica | Chamaecyparis obtusa | Bagasse (Sugarcane) | Bamboo |
| Weakly Alkaline Soluble Lignin | 21 | 22 | 26 | 20 | 19 | 33 | 32 |
| APA Lignin | 5 | 5 | 4 | 5 | 6 | 4 | 5 |
| Lignin-hemicellulose Copolymer | 32 | 23 | 14 | 14 | 12 | 12 | 15 |
| Total Soluble Part | 58 | 51 | 44 | 40 | 37 | 50 | 51 |
| Residual Cellulose | 44 | 39 | 58 | 65 | 61 | 48 | 52 |
| Total | 102 | 90 | 103 | 105 | 98 | 98 | 104 |

Table 3 shows the peracid conditions and the molecular weight of each component of polymeric lignocellulose in the two-stage microwave extraction reaction according to the M-APA method (GPC analysis values of acetylated products).

**Table 3**

| Eucalyptus Peracetic Acid 1% | Mn | Mw | Mw/Mn |
|---|---|---|---|
| APA Lignin | 3814 | 7927 | 2.1 |
| Lignin-hemicellulose Copolymer | 4203 | 8513 | 2.0 |

| Eucalyptus H₂O₂ 0.4% | Mn | Mw | Mw/Mn |
|---|---|---|---|
| APA Lignin | 3510 | 6490 | 1.8 |
| Lignin-hemicellulose Copolymer | 4128 | 6758 | 1.6 |

| Eucalyptus H₂O₂ 3.2% | Mn | Mw | Mw/Mn |
|---|---|---|---|
| APA Lignin | 3964 | 9064 | 2.3 |
| Lignin-hemicellulose Copolymer | 3364 | 6224 | 1.9 |

| Eucalyptus H₂O₂ 4.2% | Mn | Mw | Mw/Mn |
|---|---|---|---|
| APA Lignin | 3709 | 9124 | 2.5 |
| Lignin-hemicellulose Copolymer | 1865 | 4291 | 2.3 |

Table 4 shows the yield of each component of polymeric lignocellulose of various kinds of biomass in the two-stage microwave extraction reaction according to the M-APA method (wt%, raw-material biomass ratio).

**Table 4**

| | Hardwood | | Softwood | | Herbaceous Plant | |
|---|---|---|---|---|---|---|
| Biomass Species | Eucalyptus | Fagus crenata | Pinus densiflora | Cryptomeria japonica | Bagasse (Sugarcane) | Bamboo |
| APA Lignin | 7 | 4 | 7 | 4 | 7 | 11 |
| Lignin-hemicellulose Copolymer | 14 | 9 | 8 | 9 | 13 | 18 |
| Residual Cellulose | 71 | 84 | 83 | 85 | 79 | 69 |
| Total Yield | 92 | 97 | 98 | 97 | 99 | 98 |

Solvent: Acetic acid (containing 1% of peracetic acid in an amount of 0.14 mol/L)
Microwave Extraction Conditions: An APA lignin soluble part was obtained (50°C, 10 minutes, first stage); A lignin hemicellulose copolymer was obtained (140°C, 10 minutes, second stage).

Table 5 shows the yield of each component of polymeric lignocellulose of various kinds of biomass in the first-stage microwave extraction reaction according to the A-APA method (wt%, raw-material biomass ratio).

**Table 5**

| | Hardwood | | | Softwood | | Herbaceous Plant | |
|---|---|---|---|---|---|---|---|
| Raw-material Biomass Plant Species | Eucalyptus | Fagus crenata | Pinus densiflora | Cryptomeria japonica | Chamaecyparis obtusa | Bagasse (Sugarcane) | Bamboo |
| Weakly Alkaline Soluble Lignin | 22 | 22 | 25 | 19 | 18 | 35 | 32 |
| APA Lignin + Lignin Polysaccharide Complex | 30 | 26 | 13 | 21 | 19 | 12 | 19 |
| Total Soluble Part | 52 | 48 | 39 | 40 | 37 | 47 | 51 |
| Residual Cellulose | 54 | 55 | 63 | 65 | 68 | 51 | 55 |
| Total | 106 | 103 | 101 | 105 | 105 | 98 | 106 |

Table 6 shows the molecular weight of each component of polymeric lignocellulose of various kinds of biomass obtained according to the A-APA method (GPC analysis values of acetylated products).

**Table 6**

| Eucalyptus | Mn | Mw | Mw/Mn |
|---|---|---|---|
| Weakly Alkaline Soluble Lignin | 1571 | 3006 | 1.9 |
| APA Lignin | 2467 | 3645 | 1.5 |
| Lignin-hemicellulose Copolymer | 2023 | 6438 | 3.2 |
| APA Lignin + Lignin Polysaccharide Complex | 2116 | 7156 | 3.4 |

| Fagus crenata | Mn | Mw | Mw/Mn |
|---|---|---|---|
| Weakly Alkaline Soluble Lignin | 1254 | 3502 | 2.8 |
| APA Lignin | 4977 | 8895 | 1.8 |
| Lignin-hemicellulose Copolymer | 1935 | 4947 | 2.6 |
| APA Lignin + Lignin Polysaccharide Complex | 1875 | 5115 | 2,7 |

| Pinus densiflora | Mn | Mw | Mw/Mn |
|---|---|---|---|
| Weakly Alkaline Soluble Lignin | 1437 | 3768 | 2.6 |
| APA Lignin | 1178 | 2361 | 2.0 |
| Lignin-hemicellulose Copolymer | 2138 | 5544 | 2.6 |
| APA Lignin + Lignin Polysaccharide Complex | 1879 | 4565 | 2.4 |

| Cryptomeria japonica | Mn | Mw | Mw/Mn |
|---|---|---|---|
| Weakly Alkaline Soluble Lignin | 1293 | 2876 | 2.2 |
| APA Lignin | 974 | 1836 | 1.9 |
| Lignin-hemicellulose Copolymer | 1992 | 4842 | 2.4 |
| APA Lignin + Lignin Polysaccharide Complex | 2088 | 4579 | 2.2 |

| Chamaecyparis obtusa | Mn | Mw | Mw/Mn |
|---|---|---|---|
| Weakly Alkaline Soluble Lignin | 1711 | 3519 | 2.1 |
| APA Lignin | 985 | 1948 | 2.0 |
| Lignin-hemicellulose Copolymer | 1981 | 4882 | 2.5 |
| APA Lignin + Lignin Polysaccharide Complex | 2069 | 4671 | 2.3 |

| Bagasse (Sugarcane) | Mn | Mw | Mw/Mn |
|---|---|---|---|
| Weakly Alkaline Soluble Lignin | 3160 | 6179 | 2.0 |
| APA Lignin | 2168 | 3024 | 1.4 |
| Lignin-hemicellulose Copolymer | 1785 | 3588 | 2.0 |
| APA Lignin + Lignin Polysaccharide Complex | 1525 | 2949 | 1.9 |

| Bamboo | Mn | Mw | Mw/Mn |
|---|---|---|---|
| Weakly Alkaline Soluble Lignin | 3035 | 6325 | 2.1 |
| APA Lignin | 2437 | 3601 | 1.5 |
| Lignin-hemicellulose Copolymer | 2119 | 4798 | 2.3 |
| APA Lignin + Lignin Polysaccharide Complex | 1790 | 3718 | 2.1 |

The study of conditions found that when the starting material is wood-based biomass, the temperature suitable for contact with an organic acid and a peracid is 40 to 90°C for obtaining soluble lignin; and that the temperature suitable for contact with an organic acid and a peracid is 100 to 160°C for obtaining a lignin-hemicellulose copolymer. The study of conditions also found that when the starting material is herbaceous biomass, the temperature suitable for contact with an organic acid and a peracid is from room temperature to 60°C for obtaining soluble lignin; and that the temperature suitable for contact with an organic acid and a peracid is 70 to 150°C for obtaining a lignin-hemicellulose copolymer.

The study of conditions found that the heating time by microwave irradiation may be 5 to 30 minutes, and preferably 10 minutes. The net irradiation time was short. See Fig. 2 for the microwave profile, and data on temperature and pressure.

The study of conditions also found that the microwave heating resulted in a higher yield and a higher selectivity at low temperature in a short time with a low energy input than the external heating method. More specifically, microwave effects such as local heating, internal heating, electron transfer, and a chemical-permeation-promoting effect were observed.

The study of conditions also found that acetic acid, formic acid, and glyoxylic acid (organic acids) were all able to isolate lignin, and that acetic acid was most suitable from the viewpoint of yield, purity, and industrial application.

Fig. 3 shows the results of NMR in Test Examples 1-6-2 and 1-6-3. Fig. 3 shows the results of analysis of lignin isolated from *eucalyptus* (starting material) according to the M-APA method (microwave treatment at 50°C for 10 minutes with acetic acid peracetic acid 1%). Quantification of the proportion of interunit bonds of lignocellulose according to the TAF-NMR method found that the signal derived from lignin was 99%, and that the signal derived from polysaccharides (hemicelluloses) was 1%. The breakdown of the interunit bonds of lignin was the following: 81% of ether-type β-O-4, 5% of β-5, 11% of β-β, 1% of dibenzodioxocin, and 1% for the remainder. See Fig. 4 for the partial chemical structures of the interunit bonds of lignin and the covalent bonds of lignin-hemicellulose.

Fig. 5 shows the results of NMR in Test Example 1-6-4. Fig. 5 shows the results of analysis of the lignin-hemicellulose copolymer isolated from individual plants (starting materials) according to the M-APA method (microwave treatment at 50°C for 10 minutes with acetic acid peracetic acid 1%). The LC bonds (ether type and ester type) indicated by circles in the figure are a main branched structure present in a ratio equivalent to or higher than the abundance ratio of β-5 and β-β bonds, which are the main interunit bonds of lignin. The isolated lignin-hemicellulose copolymer is characterized in particular by the presence of an LCα-ester linkage.

### Test Example 2: Preparation of Self-assembled Body

A self-assembled body was prepared from lignin (sample) isolated from *eucalyptus* or bamboo (starting material) according to the M-APA method (microwave 50°C, 10 min-treatment, acetic acid-peracetic acid 1% or acetic acid-0.2M hydrogen peroxide) or a lignin-polysaccharide copolymer (sample) isolated from *eucalyptus* (starting material) according to the M-APA method (microwave 140°C, 10 min-treatment, acetic acid-peracetic acid 1% or acetic acid-0.2M hydrogen peroxide). Specifically, the isolation was performed as described below.

A DMSO solution with a sample concentration of 1 to 2 wt% was prepared and diluted to 0.01 to 0.02 wt% with a mixed solvent containing a separating solvent (acetonitrile or ethanol) and water (or a buffer) (1:1 or 2:1) to obtain a sample solution. 0.1 to 0.2 mL of the sample solution was applied to a glass slide or a cover glass, and the solvent was evaporated under atmospheric pressure to obtain a self-assembled body in the form of a thin film. Of the above conditions, when an equal amount of water (or a buffer) was added to a DMSO solution with a sample concentration of 1 wt%, and the solution was applied, a highly concentrated self-assembled body was obtained.

Subsequently, analysis was performed on the optical characteristics of the obtained self-assembled body (a solid thin lignin film or a solid thin lignin-polysaccharide copolymer film) and a comparative object (lignin obtained according to the APA method (APA lignin)). Specifically, the analysis was performed as follows.

The measurements were performed with the following.

UV-visible Absorption Spectrum: UV-2700 (manufactured by Shimadzu Corporation)
Fluorescence Spectrum: Spectrofluorometer RF-6000 (manufactured by Shimadzu Corporation)
Fluorescence Microscope Measurement: All-in-One Fluorescence Microscope BZ-X810 (manufactured by Keyence Corporation)

Analysis was performed with accompanying analysis software of the devices.

UV-visible Absorption Spectrum: Black Quartz Cell for Spectroscopic Measurement (optical path length: 10 mm)
Fluorescence Measurement: a fully transparent synthetic quartz cell (optical path length: 10 mm) and a Starna triangular quartz cell SF3 were used.

A solid measurement unit was used for the solid sample. The sample applied to a cover glass was sandwiched and immobilized with quartz plates to perform measurement.

3D fluorescence spectra were measured at an excitation wavelength of 310 to 800 nm, a data interval of 5 nm, a fluorescence wavelength of 350 to 900 nm, a data interval of 1 nm, and a scan speed of 12000 nm/min, with an ultraviolet cut filter U310 mounted on the excitation side in order to reduce the influence of scattered light and multidimensional light. The bandwidth was 5 nm on the excitation side, and 15 nm on the fluorescence side, with the sensitivity set to low.

The synchro-scanning spectrum is a scan mode in which the excitation spectrometer and the fluorescence spectrometer of a spectrofluorometer are simultaneously allowed to perform scanning with these spectrometers shifted from each other by a predetermined wavelength interval. The measurement was performed by varying the wavelength interval between excitation light and fluorescence within the range of -90 nm to 260 nm. A fluorescence having a wavelength shorter than that of excitation light (i.e., a negative wavelength interval) is detected. At this time, a fluorescence caused by an anti-Stokes shift can be selectively detected. The scanning was set so as to cover the fluorescence wavelength range of 350 to 800 nm, with the data interval set to 0.1 nm, the scanning speed to 600 nm/min, the bandwidth to 15 nm on the excitation side and 20 nm on the fluorescence side, and the sensitivity to low.

The UV-visible absorption spectra were measured with a double monochromator UV-2700. Wavelength scanning (200 to 900 nm) was performed.

Figs. 6 to 9 show the results. From Fig. 9, the solid thin lignin film and the solid thin lignin-polysaccharide copolymer film were found to exhibit anti-Stokes fluorescences.

### Test Example 3: Differential Thermal and Thermogravimetric Analysis

The APA lignin, the lignin-hemicellulose copolymer, and the cellulose obtained according to the APA method and the *eucalyptus* wood flour, which is a raw material of these, were subjected to simultaneous differential thermal measurement and thermogravimetric measurement. For the device, a DTC-60 analyzer (Shimadzu Corporation) was used. About 10 mg of individual powder samples were placed in a platinum cell, and nitrogen replacement was performed at 30°C for 15 minutes in a nitrogen atmosphere. Then, the temperature was increased to 1000°C at 20°C/min, followed by measurement. Figs. 10-1 and 10-2 show the results.

### Test Example 4: Solubility Measurement

The lignin and the lignin-hemicellulose copolymer obtained according to the method of Test Example 1 or a method similar thereto were measured for the solubility in 60 to 80% of 60 to 80% ethanol at 25°C. Table 7 shows the details of the measurement samples. The abbreviations in Table 7 are as listed below.
PA: Peracetic Acid
HP: Hydrogen Peroxide
50: MW50 ACTN, treatment with microwaves at 50°C, high-quality polymeric lignin
140: MW50-Mw140 ACTN, after residues were treated with microwaves at 50°C, the residues were treated at 140°C (second stage), a lignin-hemicellulose copolymer
A50: An acetic acid peracetic acid system, HP PA1% AA Mw50 ACN, high-quality polymeric lignin treated with microwaves at 50°C
H50: An acetic acid hydrogen peroxide system, HP 1M hydrogen peroxide, Mw50 ACN, high-quality polymeric lignin treated with microwaves at 50°C

**Table 7**

| | | |
|---|---|---|
| EA50 | *Eucalyptus* Chip | Acetic Acid Peracetic Acid System PA1%AA Mw50 ACTN |
| EA140 | *Eucalyptus* Chip | Acetic Acid Peracetic Acid System PA1%AA MW50-Mw140 ACTN |
| EH50 | *Eucalyptus* Chip | Acetic Acid Hydrogen Peroxide System HP 1M Hydrogen Peroxide Mw50 CAN |
| BH50 | Domestic *Fagus crenata* Sapwood | Acetic Acid Hydrogen Peroxide System HP 1M Hydrogen Peroxide Mw50 ACN |
| PH50 | Domestic *Pinus densiflora* Sapwood | Acetic Acid Hydrogen Peroxide System HP 1M Hydrogen Peroxide Mw50 ACN |
| CH50 | Domestic *Cryptomeria japonica* Sapwood | Acetic Acid Hydrogen Peroxide System HP 1M Hydrogen Peroxide Mw50 ACN |
| CH140 | Domestic *Cryptomeria japonica* Sapwood | Acetic Acid Peracetic Acid System HP 1M Hydrogen Peroxide MW50-Mw140 ACTN |
| TA50 | Domestic Bamboo: *Phyllostachys edulis* powder | Acetic Acid Peracetic Acid System PA1%AA Mw50 ACTN |
| TA140 | Domestic Bamboo: *Phyllostachys edulis* powder | Acetic Acid Peracetic Acid System PA1%AA MW50-Mw140 ACTN |
| HP50 | Domestic Bamboo: *Phyllostachys edulis* powder | Acetic Acid Hydrogen Peroxide System HP 1M Hydrogen Peroxide Mw50 ACN |

The measurement method for the solubility is as follows. A sample was stirred and dissolved in ethanol at 25°C, and the resulting product was separated into an ethanol-soluble part and ethanol-insoluble part by solid-liquid separation. An aqueous ethanol solution at 25°C (1/1 = ethanol/water) was added to the ethanol-insoluble part, and the mixture was stirred for dissolution to obtain an aqueous ethanol solution-soluble part. The aqueous ethanol solution-soluble part was mixed with the ethanol soluble part to obtain a sample solution. The amount of the aqueous ethanol solution added was adjusted so that the ethanol concentration of the sample solution was in the range of 60 to 80%. In the step of obtaining the soluble part, dispersion and solubilization were performed with an ultrasonic cleaner at 28 kHz for 3 min, as necessary. The maximum sample concentration at which the sample solution was visually transparent was defined as "solubility in 60 to 80% ethanol at 25°C."

Table 8 shows the results. The results indicate that the lignin and lignin-hemicellulose copolymers obtained by the method of the present invention exhibit excellent ethanol solubility.

**Table 8**

| | Solubility |
|---|---|
| EA50 | 8 w/v% in 80% Aqueous Ethanol Solution |
| EA140 | 8 w/v% in 80% Aqueous Ethanol Solution |
| EH50 | 15 w/v% in 60% Aqueous Ethanol Solution |
| BH50 | 20 w/v% in 60% Aqueous Ethanol Solution |
| PH50 | 20 w/v% in 60% Aqueous Ethanol Solution |
| CH50 | 8 w/v% in 70% Aqueous Ethanol Solution |
| CH140 | 20 w/v% in 60% Aqueous Ethanol Solution |
| TA50 | 8 w/v% in 80% Aqueous Ethanol Solution |
| TA140 | 8 w/v% in 80% Aqueous Ethanol Solution |
| HP50 | 15 w/v% in 60% Aqueous Ethanol Solution |

### Test Example 5: Measurement of UV Absorption

The UV absorption properties of the lignin and the lignin-hemicellulose copolymers used in Test Example 4 were measured. Specifically, the samples were individually dissolved in ethanol to 0.005 w/v%, and the UV absorption spectra of the obtained (transparent) solutions were measured with a spectrophotometer (UV-2700 manufactured by Shimadzu Corporation, optical path length: 1 cm, quartz cell).

Fig. 11 shows the results. The results indicate that the lignin and lignin-hemicellulose copolymers obtained by the method of the present invention exhibited excellent UV absorption properties.

### Test Example 6: Isolation of Lignin from Wood Chips

For wood chips, *Fagus crenata* sapwood (hardwood, size: 10 mm × 10 mm × 2 mm, 1.0 ± 0.1 g) was used in isolating lignin according to the A-APA method. Specifically, the isolation was performed as described below.

Wood chips were immersed in 10.0 mL of an alkaline solution (0.25M NaOH, 0.25M KOH, 0.1M NaOH, or 0.1M KOH) and irradiated with ultrasonic waves for 15 minutes (ultrasonic cleaner manufactured by Honda Electronics, Co. Ltd., W-113, multimode, 28 kHz, 45 kHz, 100 kHz). After one hour, the alkaline washing solution was filtered off. The washed wood chips were immersed in 10 mL of acetic acid peracid solution (prepared by adding 1 mL of 30% H₂O₂ to 9 mL of acetic acid; the final concentration of hydrogen peroxide: 3 v/v%) and irradiated with ultrasonic waves for 30 minutes (ultrasonic cleaner manufactured by Honda Electronics, Co. Ltd., W-113, multimode, 28 kHz, 45 kHz, 100 kHz). The immersion liquid was collected, and the collected acetic acid peracid solution was concentrated by evaporation, followed by lyophilization, thereby obtaining a lignin powder. The yield was 3%.

### Test Example 7: Isolation of Lignin and White Wood Chips (Hemicellulose-cellulose Complex) from Wood Chips

For wood chips, *Fagus crenata* sapwood (hardwood, size: 10 mm × 10 mm × 2 mm, 1.0 ± 0.1 g) and *Cryptomeria japonica* sapwood (softwood, size: 10 mm × 10 mm × 2 mm, 0.7 ± 0.1 g) were used in isolating lignin and hemicellulose-cellulose complexes according to the A-APA method. Specifically, the isolation was performed as described below.

The wood chips were immersed in 10.0 mL of an alkaline solution (0.25M NaOH, 0.25M KOH, 0.1M NaOH, or 0.1M KOH) and irradiated with ultrasonic waves for 30 minutes (ultrasonic cleaner manufactured by Honda Electronics, Co. Ltd., W-113, multimode, 28 kHz, 45 kHz, 100 kHz). At this time, the water in the ultrasonic cleaner was replaced (water being drained in the same amount as the amount of water added) to maintain the liquid temperature at around 50°C, which was increasing due to the ultrasonic irradiation. After one hour, the alkali washing solution was filtered off, and the obtained wood chips were immersed in 10 mL of acetic acid peracid solution (prepared by adding 1.0 mL of 30% H₂O₂ to 9 mL of acetic acid; the final concentration of hydrogen peroxide: 3 v/v%) and irradiated with ultrasonic waves for 30 minutes (ultrasonic cleaner manufactured by Honda Electronics, Co. Ltd., W-113, 28 kHz). After 10 hours, the immersion solution was collected, and 10 mL of acetic acid peracid solution was added again to immerse the wood chips, followed by ultrasonic irradiation for 30 minutes in the same manner. This operation was performed two times. The collected acetic acid peracid solution was concentrated together in a fume hood (using a Conveni evaporator manufactured by BioChromato, Inc.) and re-dissolved in 1.5 mL of an 80% dioxane v/v solution, followed by lyophilization. In this manner, a white lignin powder was obtained. The yield was 8%.
7-1) The wood chips treated with acetic acid peracid were washed with pure water and immersed in 10 mL of a 0.1M NaOH solution. 0.1 g of sodium percarbonate (Sigma Aldrich, Na₂CO₃ 1.5 H₂O₂, CAS 15630-89-4) was added thereto, and irradiation was performed for 10 minutes (ultrasonic cleaner manufactured by Honda Electronics, Co. Ltd., W-113, multimode, 28 kHz, 45 kHz, 100 kHz). This operation was performed three times at 2-hour intervals. The immersion solution was dialyzed and then lyophilized to obtain glucuronoxylan (4-O-methyl-D-glucurono-D-xylan) as a hemicellulose from the hardwood *Fagus crenata* sapwood (Fig. 12). The obtained product was identified by ¹H- and ¹H-¹³C HSQC NMR analysis. The residue was subjected to bleaching treatment, washed with pure water, and dried, thereby obtaining cellulose fibers. The bleaching treatment was performed at 30°C, 1000 rpm for 1 hour (using an Eppendorf ThermoMixer C) by adding sodium hypochlorite (5 v/v%, 5 mL). The yield on wood chips was 37%.
7-2) Acetic acid was added to the wood chips treated with acetic acid peracid, and immersion was continued to allow decolorization to progress. After 3 days, the resultant was washed with pure water and lyophilized, thereby obtaining white wood chips. The white wood chips were hard. After milling with a cutter, the white wood chips were subjected to FT-IR and solid-state CP/MAS NMR measurements. The milled white wood chips were compared with the cellulose obtained in Test Example 7-1. Figs. 14 and 15 show the results. The results revealed that the white wood chips obtained in Test Example 7-2 (the photographic images shown in Figs. 16a and 16c) were a cellulose-hemicellulose complex. The yield on wood chips was 68%.

The white wood chips were also sonicated in a sodium percarbonate-containing NaOH solution and washed in the same manner as in Test Example 7-1. Fig. 16b shows an obtained wood chip.

## Claims

1. A method for isolating from plant biomass at least one member selected from the group consisting of lignin,
hemicelluloses, lignin-polysaccharide complexes, cellulose, and hemicellulose-cellulose complexes, the method comprising
step (A) of bringing a solution containing an organic acid and a peracid into contact with plant biomass.

2. The method according to claim 1, wherein the step (A) comprises
step (A1) of bringing a solution at a temperature of 90°C or lower containing an organic acid and a peracid into contact with plant biomass, and/or
step (A2) of bringing a solution at a temperature higher than 90°C and 160°C or lower containing an organic acid and a peracid into contact with plant biomass.

3. The method according to claim 1 or 2, comprising obtaining from a soluble part obtained in the step (A) at least one member selected from the group consisting of lignin, hemicelluloses, lignin-polysaccharide complexes, and hemicellulose-cellulose complexes.

4. The method according to any one of claims 1 to 3, comprising obtaining from the insoluble part obtained in the step (A) at least one member selected from the group consisting of cellulose, hemicelluloses, and hemicellulose-cellulose complexes.

5. The method according to any one of claims 1 to 4, comprising irradiating the plant biomass with microwaves or ultrasonic waves in the step (A).

6. The method according to any one of claims 1 to 5, wherein the plant biomass used in the step (A) is an alkali-treated material of a plant body or an alkali-treated material of a mechanically processed product of a plant body.

7. Lignin having a content of β-O-4 ether type structure of 50% or more and a solubility in 60 to 80% of 60 to 80% ethanol at 25°C of 2 w/v% or more.

8. Lignin obtainable by the method of any one of claims 1 to 6.

9. A lignin-polysaccharide complex containing at least one bond selected from the group consisting of an α-ether bond between lignin and polysaccharide, an α-ester bond between lignin and polysaccharide, and a γ-ester bond between lignin and polysaccharide.

10. The lignin-polysaccharide complex according to claim 9, which has a solubility in 60 to 80% ethanol at 25°C of 2 w/v% or more.

11. A lignin-polysaccharide complex obtainable by the method of any one of claims 1 to 6.

12. Cellulose obtainable by the method of any one of claims 1 to 6.

13. A hemicellulose-cellulose complex obtainable by the method of any one of claims 1 to 6.

14. A hemicellulose obtainable by the method of any one of claims 1 to 6.

15. A self-assembled body, the self-assembled body being at least one member selected from the group consisting of the lignin of claim 7 or 8 and the lignin-polysaccharide complex of any one of claims 9 to 11.

16. The self-assembled body according to claim 15, which is in a sheet or particulate form.

17. A phosphor comprising the self-assembled body of claim 15 or 16.

18. The phosphor according to claim 17, which exhibits anti-Stokes fluorescence.

19. An ultraviolet absorber containing at least one member selected from the group consisting of the lignin of claim 7 or 8 and the lignin-polysaccharide complex of any one of claims 9 to 11.
